(19) Europäisches Patentamt
European Patent Office
Office européen des brevets

(11) **EP 3 154 296 B1**

(12) **EUROPEAN PATENT SPECIFICATION**

(45) Date of publication and mention
of the grant of the patent:
**03.10.2018 Bulletin 2018/40**

(51) Int Cl.:
*H04W 52/20* (2009.01)      *H04L 27/26* (2006.01)
*H04L 1/00* (2006.01)       *H04L 5/00* (2006.01)

(21) Application number: **14896121.2**

(22) Date of filing: **26.06.2014**

(86) International application number:
**PCT/CN2014/080858**

(87) International publication number:
**WO 2015/196422 (30.12.2015 Gazette 2015/52)**

(54) **METHOD, DEVICE AND SYSTEM FOR DETERMINING AND ADJUSTING MODULATION FORMAT AND CARRIER POWER**

VERFAHREN, VORRICHTUNG UND SYSTEM ZUR BESTIMMUNG UND EINSTELLUNG DES MODULATIONSFORMATS UND DER TRÄGERLEISTUNG

PROCÉDÉ, DISPOSITIF ET SYSTÈME DE DÉTERMINATION ET DE RÉGLAGE DE FORMAT DE MODULATION ET DE PUISSANCE DE PORTEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.04.2017 Bulletin 2017/15**

(73) Proprietor: **Huawei Technologies Co., Ltd. Longgang District Shenzhen, Guangdong 518129 (CN)**

(72) Inventors:
• **ZHANG, Qiang**
  **Shenzhen, Guangdong 518129 (CN)**
• **LIU, Ning**
  **Shenzhen, Guangdong 518129 (CN)**

(74) Representative: **Epping - Hermann - Fischer Patentanwaltsgesellschaft mbH Schloßschmidstraße 5 80639 München (DE)**

(56) References cited:
EP-A2- 2 391 048         WO-A1-2012/162655
WO-A1-2013/005214        WO-A2-2005/029803
CN-A- 1 604 511          CN-A- 1 633 116
CN-A- 102 264 124        CN-A- 103 782 531
US-A1- 2001 031 014      US-A1- 2007 099 577

EP 3 154 296 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to the field of digital communications technologies, and in particular, to a modulation format and carrier power determining method, a modulation format and carrier power adjusting method, a device, and a system.

**BACKGROUND**

In a communications system, especially in an optical communications system, a system channel is no longer flat because of impact of filtering performed by various electrical components and optical components, and impact of other damage. A most common characteristic is that performance is high at a low frequency but gradually deteriorates as the frequency increases. To fully utilize spectrum resources of a system, multi-carrier technologies are proposed. With the multi-carrier technologies, a frequency band of a multi-carrier communications system is divided into at least two sub-bands, and each sub-band is approximated as an independent narrowband system in design. In other words, a carrier in the multi-carrier communications system and used for signal transmission is divided into at least two subcarriers, so that utilization of each subcarrier is greatly improved. Common multi-carrier technologies include discrete multitone modulation (Discrete Multitone Modulation, DMT) or multiband carrierless amplitude and phase modulation (Multiband Carrierless Amplitude and Phase Modulation, Multiband-CAP).

With DMT or Multiband-CAP used for band-division modulation processing, resources are allocated according to attenuation characteristics of sub-channels and noise and interference distribution statuses of the sub-channels. When a total power and a bit rate of a system are given, a modulation format in which a signal is modulated onto each subcarrier and a carrier power of each subcarrier are adjusted, so that performance of the system is optimal. An operation of adjusting the modulation format in which a signal is modulated onto each subcarrier and the carrier power of each subcarrier is generally referred to as water-filling.

In a water-filling process, an obtained signal-to-noise ratio (Signal to Noise Ratio, SNR) characteristic of each sub-band is generally used to adjust the modulation format in which a signal is modulated onto each subcarrier, so that higher-order modulation is used for a subcarrier with better performance, and lower-order modulation is used for a subcarrier with poorer performance. In addition, the carrier power of each subcarrier of at least two subcarriers is adjusted, to finally make a consistent bit error characteristic of the subcarriers in the at least two subcarriers.

The Shannon's equation-based Chows water-filling algorithm and the greedy algorithm-based water-filling algorithm are two mainstream water-filling algorithms at present. In the Chows water-filling algorithm, a modulation format is adjusted according to the Shannon's equation $\frac{C}{B} = \log 2 \left(1 + \frac{S}{N}\right)$. C is an information capacity, measured in bit/s. B is a bandwidth occupied by a channel, measured in Hz. C/B is a spectrum efficiency. S is a signal power, measured in W. N is a noise power, measured in W. S/N is a signal-to-noise ratio (SNR). A numeric value of the spectrum efficiency C/B is related to a modulation format used for a subcarrier. Therefore, the modulation format that can be used for the subcarrier may be estimated from a signal-to-noise ratio (SNR) of the subcarrier. In the greedy algorithm-based water-filling algorithm, the modulation format is adjusted by calculating an energy variation resulting from an increase or a decrease of the modulation order under a same bit error rate. An energy value is calculated by using an average energy after a constellation diagram changes.

In both the foregoing two water-filling processes, the modulation format and the carrier power are calculated and adjusted based on theoretical deducing. However, actually, performance achievable by a multi-carrier communications system is related to both noise distribution and codes used for subcarriers. Therefore, the existing water-filing methods cannot accurately reflect actual performance of a multi-carrier communications system.

EP 2 391 048 A2 discloses a method and apparatus for bit and power allocation and a communication system. The method for bit and power allocation comprises: determining a set of candidate modulation modes for sub-channels; constructing an SNR lookup table according to a predetermined target BER, the SNR lookup table containing a relationship of an SNR and the number of bits corresponding to a modulation mode in the set of candidate modulation modes at the target BER; obtaining normalized SNRs on the sub-channels; initializing the numbers of bits for the sub-channels; initializing powers for the sub-channels according to the numbers of bits for the sub-channels, the normalized SNRs on the sub-channels and the SNR lookup table; and adjusting the numbers of bits and the powers for the sub-channels in accordance with a principle of maximizing power utilization rate, to obtain the result of the bit and power allocation for the sub-channels.

WO 2012/162655 A1 provides a link adaptive orthogonal frequency-division multiplexed (OFDM) ultrasonic physical layer that is capable of high data rate communication through metallic structures. The use of an adaptive OFDM subcarrier-based modulation technique mitigates the effects of severe frequency selective fading of the through-metal communication link and improves spectral efficiency by exploiting the slow-varying nature of the channel. To address the potential ill effects of peak-to-average power ratio (PAPR) and to make more efficient use of the power amplifiers in the system, the invention modifies and implements a symbol rotation and inversion- based PAPR reduction algorithm in the adaptive OFDM framework. This joint adaptive physical layer is capable of increasing data rates by roughly 220% in comparison to conventional narrowband techniques at average transmit powers of roughly 7 mW while constrained to a desired BER.

## SUMMARY

Embodiments of the present invention provide a modulation format and carrier power determining method, a modulation format and carrier power adjusting method, a device, and a system, so as to perform overall optimization on a multi-carrier communications system, to accurately reflect actual performance of the multi-carrier communications system. According to a first aspect, a modulation format and carrier power determining method is provided, where the method is applied to a multi-carrier communications system and includes:

receiving a modulated signal, where the modulated signal is a signal modulated onto at least two subcarriers of a carrier for transmission;
determining a per-unit-power signal-to-noise ratio of each subcarrier of the at least two subcarriers by using the modulated signal;
determining a bit error rate of each subcarrier of the at least two subcarriers according to the signal-to-noise ratio and a preset correspondence between signal-to-noise ratios and bit error rates determined according to a diagram of signal-to-noise ratio and bit error rate distribution curves, to obtain subcarrier bit error rates;
determining, according to the subcarrier bit error rates, a modulation format in which a to-be-modulated signal is modulated onto each subcarrier of the at least two subcarriers; and
determining a system bit error rate of the multi-carrier communications system according to the subcarrier bit error rates, and determining a carrier power of each subcarrier of the at least two subcarriers according to the system bit error rate.

With reference to the first aspect, in a first implementation manner, the determining, according to the subcarrier bit error rates, a modulation format in which a to-be-modulated signal is modulated onto each subcarrier of the at least two subcarriers includes:

increasing a modulation order of a subcarrier with a lowest subcarrier bit error rate by 1;
determining a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates;
determining a quantity of bits currently allocated to each subcarrier of the at least two subcarriers;
determining a total quantity of bits according to the quantity of bits allocated to each subcarrier of the at least two subcarriers, where the total quantity of bits is a sum of the quantities of bits allocated to the at least two subcarriers;
comparing the total quantity of bits with a specified target quantity of bits; and
if the total quantity of bits is less than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

With reference to the first aspect, in a second implementation manner, the determining, according to the subcarrier bit error rates, a modulation format in which a to-be-modulated signal is modulated onto each subcarrier of the at least two subcarriers includes:

decreasing a modulation order of a subcarrier with a highest subcarrier bit error rate by 1;
determining a bit error rate of the subcarrier whose modulation order is decreased by 1, according to a modulation format of the subcarrier whose modulation order is increased by 1, a signal-to-noise ratio of the subcarrier whose modulation order is increased by 1, and the preset correspondence between signal-to-noise ratios and bit error rates;
determining a quantity of bits allocated to each subcarrier of the at least two subcarriers within a unit time;
determining a total quantity of bits according to the quantity of bits allocated to each subcarrier of the at least two subcarriers, where the total quantity of bits is a sum of the quantities of bits allocated to the at least two subcarriers;
comparing the total quantity of bits with a specified target quantity of bits; and
if the total quantity of bits is greater than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

With reference to any one of the foregoing implementation manners of the first aspect, in a third implementation manner, the determining a carrier power of each subcarrier of the at least two subcarriers according to the system bit error rate includes:

allocating an initial power to each subcarrier of the at least two subcarriers, and performing normalization processing for a first time on a total power of the respective carrier powers of the at least two subcarriers after initial power allocation, where subcarriers after initial power allocation that have a same modulation format have a same signal-to-noise ratio, and a sum of carrier powers, after normalization processing is performed on the total power of the respective carrier powers of the at least two subcarriers after initial power allocation, is equal to a specified target power;

determining a subcarrier bit error rate of each subcarrier of the at least two subcarriers, according to a signal-to-noise ratio of each subcarrier of the at least two subcarriers after normalization processing is performed for the first time and according to the preset correspondence between signal-to-noise ratios and bit error rates;

determining, according to the subcarrier bit error rate of each subcarrier of the at least two subcarriers, a system bit error rate that is after normalization processing is performed for the first time, and using the system bit error rate that is after normalization processing is performed for the first time as a first bit error rate;

increasing a modulation order of a subcarrier that requires a lowest power when the normalization processing is performed by 1, and decreasing a modulation order of a subcarrier that requires a highest power when the normalization processing is performed by 1, and then re-allocating a power to each subcarrier of the at least two subcarriers;

performing normalization processing for a second time on a total power of the respective carrier powers of the at least two subcarriers after power re-allocation;

determining a subcarrier bit error rate of each subcarrier of the at least two subcarriers, according to a signal-to-noise ratio of each subcarrier of the at least two subcarriers after normalization processing is performed for the second time and according to the preset correspondence between signal-to-noise ratios and bit error rates;

determining, according to the subcarrier bit error rate of each subcarrier of the at least two subcarriers, a system bit error rate that is after normalization processing is performed for the second time, and using the system bit error rate that is after normalization processing is performed for the second time as a second bit error rate;

comparing magnitudes of the first bit error rate and the second bit error rate; and

if the first bit error rate is greater than the second bit error rate, performing the foregoing steps repeatedly until the first bit error rate is not greater than the second bit error rate, and using a carrier power that corresponds to each subcarrier of the at least two subcarriers when the first bit error rate is not greater than the second bit error rate as a carrier power of the corresponding subcarrier.

With reference to the first aspect, in a fourth implementation manner, after the determining a modulation format in which a to-be-modulated signal is modulated onto each subcarrier of the at least two subcarriers and the determining a carrier power of each subcarrier of the at least two subcarriers, the method further includes:
generating and sending a notification message including the modulation format and the carrier power.

According to a second aspect, a modulation format and carrier power adjusting method is provided, where the method is applied to a multi-carrier communications system and includes:

receiving a notification message, where the notification message includes a modulation format in which a to-be-modulated signal is modulated onto each subcarrier of at least two subcarriers, and a carrier power of each subcarrier of the at least two subcarriers;

adjusting, according to the modulation format, a modulation format in which the to-be-modulated signal is modulated onto each subcarrier of the at least two subcarriers; and

adjusting a carrier power of each subcarrier of the at least two subcarriers according to the carrier power, where

the modulation format, included in the notification message, in which a to-be-modulated signal is modulated onto each subcarrier of the at least two subcarriers is determined according to a subcarrier bit error rate of each subcarrier of the at least two subcarriers, and the subcarrier bit error rate is determined according to a per-unit-power signal-to-noise ratio of the corresponding subcarrier and a preset correspondence between signal-to-noise ratios and bit error rates determined according to a diagram of signal-to-noise ratio and bit error rate distribution curves; and

the carrier power, included in the notification message, of each subcarrier of the at least two subcarriers is determined according to a system bit error rate of the multi-carrier communications system, and the system bit error rate is determined according to the subcarrier bit error rate of each subcarrier of the at least two subcarriers.

According to a third aspect, a modulation format and carrier power determining apparatus is provided, where the apparatus is applied to a multi-carrier communications system and includes a receiving unit, a first determining unit, a second determining unit, and a third determining unit, where

the receiving unit is configured to receive a modulated signal, where the modulated signal is a signal modulated onto at least two subcarriers of a carrier for transmission;
the first determining unit is configured to determine a per-unit-power signal-to-noise ratio of each subcarrier of the at least two subcarriers by using the modulated signal received by the receiving unit;
the second determining unit is configured to: determine a bit error rate of each subcarrier of the at least two subcarriers, according to the per-unit-power signal-to-noise ratio that is of each subcarrier of the at least two subcarriers and determined by the first determining unit, and according to a preset correspondence between signal-to-noise ratios and bit error rates determined according to a diagram of signal-to-noise ratio and bit error rate distribution curves, to obtain subcarrier bit error rates; and determine a system bit error rate of the multi-carrier communications system according to the subcarrier bit error rates; and
the third determining unit is configured to: determine, according to the subcarrier bit error rates determined by the second determining unit, a modulation format in which a to-be-modulated signal is modulated onto each subcarrier of the at least two subcarriers; and determine a carrier power of each subcarrier of the at least two subcarriers according to the system bit error rate determined by the second determining unit.

With reference to the third aspect, in a first implementation manner, the third determining unit is specifically configured to determine, in a following manner according to the subcarrier bit error rates, the modulation format in which a to-be-modulated signal is modulated onto each subcarrier of the at least two subcarriers:

increasing a modulation order of a subcarrier with a lowest subcarrier bit error rate by 1;
determining a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates;
determining a quantity of bits currently allocated to each subcarrier of the at least two subcarriers;
determining a total quantity of bits according to the quantity of bits allocated to each subcarrier of the at least two subcarriers, where the total quantity of bits is a sum of the quantities of bits allocated to the at least two subcarriers;
comparing the total quantity of bits with a specified target quantity of bits; and
if the total quantity of bits is less than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier; or
decreasing a modulation order of a subcarrier with a highest subcarrier bit error rate by 1;
determining a bit error rate of the subcarrier whose modulation order is decreased by 1, according to a modulation format of the subcarrier whose modulation order is increased by 1, a signal-to-noise ratio of the subcarrier whose modulation order is increased by 1, and the preset correspondence between signal-to-noise ratios and bit error rates;
determining a quantity of bits allocated to each subcarrier of the at least two subcarriers within a unit time;
determining a total quantity of bits according to the quantity of bits allocated to each subcarrier of the at least two subcarriers, where the total quantity of bits is a sum of the quantities of bits allocated to the at least two subcarriers;
comparing the total quantity of bits with a specified target quantity of bits; and
if the total quantity of bits is greater than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

With reference to the third aspect, or the first implementation manner of the third aspect, in a second implementation manner, the third determining unit is specifically configured to determine the carrier power of each subcarrier of the at least two subcarriers according to the system bit error rate in the following manner:

allocating an initial power to each subcarrier of the at least two subcarriers, and performing normalization processing for a first time on a total power of the respective carrier powers of the at least two subcarriers after initial power allocation, where subcarriers after initial power allocation that have a same modulation format have a same signal-to-noise ratio, and a sum of carrier powers, after normalization processing is performed on the total power of the respective carrier powers of the at least two subcarriers after initial power allocation, is equal to a specified target power;

determining a subcarrier bit error rate of each subcarrier of the at least two subcarriers, according to a signal-to-noise ratio of each subcarrier of the at least two subcarriers after normalization processing is performed for the first time and according to the preset correspondence between signal-to-noise ratios and bit error rates;

determining, according to the subcarrier bit error rate of each subcarrier of the at least two subcarriers, a system bit error rate that is after normalization processing is performed for the first time, and using the system bit error rate that is after normalization processing is performed for the first time as a first bit error rate;

increasing a modulation order of a subcarrier that requires a lowest power when the normalization processing is performed by 1, and decreasing a modulation order of a subcarrier that requires a highest power when the normalization processing is performed by 1, and then re-allocating a power to each subcarrier of the at least two subcarriers;

performing normalization processing for a second time on a total power of the respective carrier powers of the at least two subcarriers after power re-allocation;

determining a subcarrier bit error rate of each subcarrier of the at least two subcarriers, according to a signal-to-noise ratio of each subcarrier of the at least two subcarriers after normalization processing is performed for the second time and according to the preset correspondence between signal-to-noise ratios and bit error rates;

determining, according to the subcarrier bit error rate of each subcarrier of the at least two subcarriers, a system bit error rate that is after normalization processing is performed for the second time, and using the system bit error rate that is after normalization processing is performed for the second time as a second bit error rate;

comparing magnitudes of the first bit error rate and the second bit error rate; and

if the first bit error rate is greater than the second bit error rate, performing the foregoing steps repeatedly until the first bit error rate is not greater than the second bit error rate, and using a carrier power that corresponds to each subcarrier of the at least two subcarriers when the first bit error rate is not greater than the second bit error rate as a carrier power of the corresponding subcarrier.

With reference to the third aspect, in a third implementation manner, the determining apparatus further includes a generation unit and a sending unit, where

the generation unit is configured to: after the third determining unit determines the modulation format in which a to-be-modulated signal is modulated onto each subcarrier of the at least two subcarriers, and determines the carrier power of each subcarrier of the at least two subcarriers, generate a notification message including the modulation format and the carrier power; and

the sending unit is configured to send the notification message generated by the generation unit.

According to a fourth aspect, a receiver is provided, including a demodulator, a driver, a decoder, and any one of the foregoing modulation format and carrier power determining apparatus, where

the demodulator is configured to receive a multi-carrier signal and perform demodulation to obtain a modulated signal;

the driver is configured to transfer the modulated signal obtained by means of demodulation by the demodulator to the modulation format and carrier power determining apparatus;

the modulation format and carrier power determining apparatus is configured to: receive the modulated signal transferred by the driver; process the modulated signal; determine a modulation format in which a to-be-modulated signal is modulated onto each subcarrier of at least two subcarriers and a carrier power of each subcarrier of the at least two subcarriers; and generate and send a notification message including the modulation format and the carrier power; and

the decoder is configured to decode the modulated signal processed by the modulation format and carrier power determining apparatus and output a decoded signal. According to a fifth aspect, a modulation format and carrier power adjusting apparatus is provided, including a receiving unit and an adjustment unit, where

the receiving unit is configured to receive a notification message, where the notification message includes a modulation format in which a to-be-modulated signal is modulated onto each subcarrier of at least two subcarriers, and a carrier power of each subcarrier of the at least two subcarriers; and

the adjustment unit is configured to: adjust, according to the modulation format included in the notification message received by the receiving unit, a modulation format in which the to-be-modulated signal is modulated onto each subcarrier of the at least two subcarriers; and adjust a carrier power of each subcarrier of the at least two subcarriers according to the carrier power included in the notification message received by the receiving unit, where

the modulation format, included in the notification message, in which a to-be-modulated signal is modulated onto each subcarrier of the at least two subcarriers is determined according to a subcarrier bit error rate of each subcarrier of the at least two subcarriers, and the subcarrier bit error rate is determined according to a per-unit-power signal-to-noise ratio of the corresponding subcarrier and a preset correspondence between signal-to-noise ratios and bit error rates determined according to a diagram of signal-to-noise ratio and bit error rate distribution curves; and

the carrier power, included in the notification message, of each subcarrier of the at least two subcarriers is determined according to a system bit error rate of the multi-carrier communications system, and the system bit error rate is determined according to the subcarrier bit error rate of each subcarrier of the at least two subcarriers.

According to a sixth aspect, a transmitter is provided, including an encoder, a driver, a modulator, and the foregoing modulation format and carrier power adjusting apparatus, where

the encoder is configured to receive a bit stream, and encode the received bit stream;
the modulation format and carrier power adjusting apparatus is configured to: receive a bit stream obtained by means of encoding by the encoder; perform data processing on the encoded bit stream to form at least two subcarriers; and adjust, according to a received notification message, a modulation format in which a to-be-modulated signal is modulated onto each subcarrier of the at least two subcarriers and a carrier power of each subcarrier of the at least two subcarriers, where the notification message includes a modulation format in which the to-be-modulated signal is modulated onto each subcarrier of the at least two subcarriers and a carrier power of each subcarrier of the at least two subcarriers;
the driver is configured to transfer the multiple carriers formed by means of processing by the modulation format and carrier power adjusting apparatus and modulation format and carrier power adjustment values to the modulator; and
the modulator is configured to modulate the to-be-modulated signal onto the multiple carriers.

According to a seventh aspect, a multi-carrier communications system is provided, including a receiver and a transmitter, where
the receiver is configured to: determine a per-unit-power signal-to-noise ratio of each subcarrier of at least two subcarriers by using a modulated signal; determine a bit error rate of each subcarrier of the at least two subcarriers according to the signal-to-noise ratio and a preset correspondence between signal-to-noise ratios and bit error rates determined according to a diagram of signal-to-noise ratio and bit error rate distribution curves, to obtain subcarrier bit error rates; determine, according to the subcarrier bit error rates, a modulation format in which a to-be-modulated signal is modulated onto each subcarrier of the at least two subcarriers; determine a system bit error rate of the multi-carrier communications system according to the subcarrier bit error rates; determine a carrier power of each subcarrier of the at least two subcarriers according to the system bit error rate; generate a notification message including the modulation format and the carrier power; and feed back the notification message to the transmitter; and
the transmitter receives the notification message; adjusts, according to the modulation format included in the notification message, a modulation format in which the to-be-modulated signal is modulated onto each subcarrier of the at least two subcarriers; and adjusts a carrier power of each subcarrier of the at least two subcarriers according to the carrier power included in the notification message.

According to the modulation format and carrier power determining method, the modulation format and carrier power adjusting method, the device, and the system provided in the embodiments of the present invention, a bit error rate of each subcarrier of at least two subcarriers is determined according to a signal-to-noise ratio, to obtain subcarrier bit error rates; a system bit error rate is determined according to the obtained subcarrier bit error rates; a modulation format in which a to-be-modulated signal is modulated onto each subcarrier of the at least two subcarriers is determined according to the determined subcarrier bit error rates; and a carrier power of each subcarrier of the at least two subcarriers is determined according to the system bit error rate. The bit error rate is related to both noise distribution and codes used for the subcarriers, and can reflect actual performance of a multi-carrier communications system. Therefore, in the present invention, with modulation format and carrier power determining and water-filling performed according to a correspondence between signal-to-noise ratios and bit error rates, the actual performance of the multi-carrier communications system can be reflected in a relatively accurate way.

**BRIEF DESCRIPTION OF DRAWINGS**

FIG. 1 is a schematic diagram of a principle of data sending and receiving in a multi-carrier communications system;
FIG. 2 is a diagram of SNR and BER distribution curves of different modulation formats without TCM coding according to an embodiment of the present invention;
FIG. 3 is a diagram of SNR and BER distribution curves of different modulation formats with 64-state TCM coding according to an embodiment of the present invention;
FIG. 4 is an implementation flowchart of a modulation format and carrier power determining method according to an embodiment of the present invention;

FIG. 5 is an implementation flowchart of determining a modulation format according to a subcarrier bit error rate, according to an embodiment of the present invention;

FIG. 6 is an implementation flowchart of determining a carrier power according to a system bit error rate, according to an embodiment of the present invention;

FIG. 7 is another implementation flowchart of a modulation format and carrier power determining method according to an embodiment of the present invention;

FIG. 8 is an implementation flowchart of modulation format and carrier power adjustment according to an embodiment of the present invention;

FIG. 9A and FIG. 9B are schematic compositional diagrams of a modulation format and carrier power determining apparatus according to an embodiment of the present invention;

FIG. 10 is a schematic compositional diagram of another modulation format and carrier power determining apparatus according to an embodiment of the present invention;

FIG. 11 is a schematic compositional diagram of a receiver according to an embodiment of the present invention;

FIG. 12 is a schematic compositional diagram of a modulation format and carrier power adjusting apparatus according to an embodiment of the present invention;

FIG. 13 is a schematic compositional diagram of another modulation format and carrier power adjusting apparatus according to an embodiment of the present invention;

FIG. 14 is a schematic compositional diagram of a transmitter according to an embodiment of the present invention; and

FIG. 15 is a schematic compositional diagram of a multi-carrier communications system according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

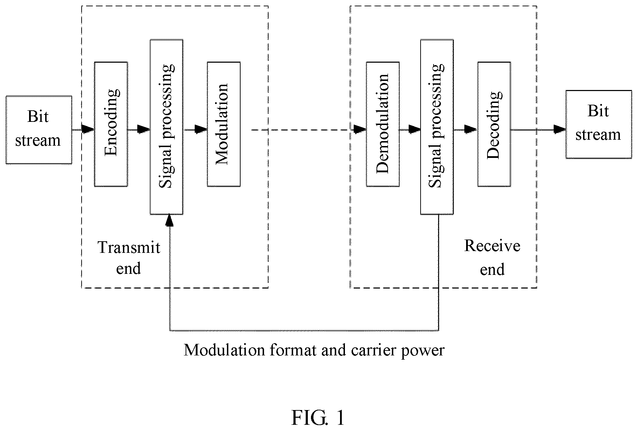

A modulation format and carrier power determining method and a modulation format and carrier power adjusting method provided in the embodiments of the present invention are applicable to a multi-carrier communications system. The multi-carrier communications system may be a multi-carrier communications system of electrical generation or may be a multi-carrier communications system of optical generation, which is not limited in the embodiments of the present invention. In the embodiments of the present invention, a multi-carrier communications system of electrical generation is used as an example for description in the following. FIG. 1 shows a schematic diagram of a principle of data sending and receiving in a multi-carrier communications system of electrical generation. A transmit end encodes an input bit stream; performs data processing on an encoded bit stream to form multiple carriers (at least two subcarriers); adjusts a modulation format and a carrier power according to a modulation format in which a to-be-modulated signal is modulated onto each subcarrier of the at least two subcarriers and according to a carrier power of each subcarrier of the at least two subcarriers, where the modulation format and the carrier power are fed back by a receive end; and modulates the to-be-modulated signal by using an adjusted adjustment format, and transfers the to-be-modulated signal at an adjusted carrier power to the receive end. After receiving a modulated signal, the receive end restores and outputs the bit stream by using a process inverse to that of the transmit end; determines, by using the received modulated signal, a modulation format in which a to-be-modulated signal is modulated onto each subcarrier of the at least two subcarriers, and a carrier power of each subcarrier of the at least two subcarriers; and feeds back the modulation format and the carrier power to the receive end, so that the transmit end performs modulation format and carrier power adjustment according to the modulation format and the carrier power that are fed back by the receive end.

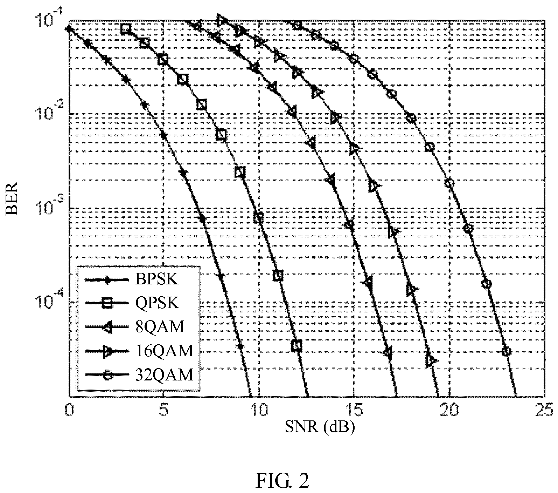

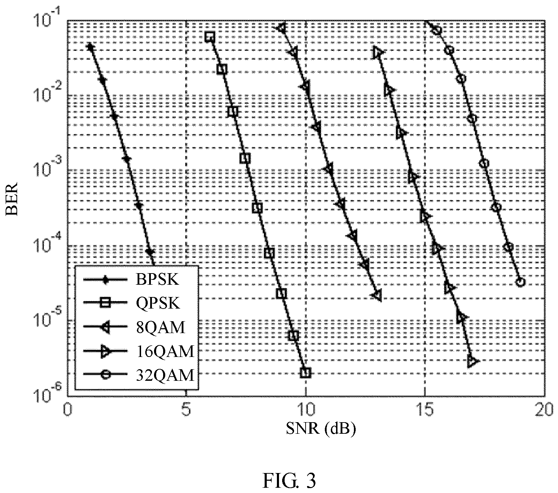

Different coding systems vary greatly in system performance. FIG. 2 and FIG. 3 show diagrams of signal-to-noise ratio (SNR) and bit error rate (Bit Error Rate, BER) distribution curves in two different coding systems. In FIG. 2 and FIG. 3, horizontal coordinates represent SNRs, and vertical coordinates represent BERs. Different curves represent different modulation formats. FIG. 2 is a diagram of SNR and BER distribution curves of different modulation formats without TCM coding. FIG. 3 is a diagram of SNR and BER distribution curves of different modulation formats with 64-state trellis checking coding (Trellis Coded Modulation, TCM) coding. It can be learned from FIG. 2 and FIG. 3 that, the distribution of SNRs and BERs varies greatly with different coding schemes and different modulation formats. Such differences, however, cannot be reflected based on either the Shannon's equation-based Chows water-filling algorithm or the greedy algorithm-based water-filling algorithm. Therefore, with water-filling performed based on a SNR-BER relationship to optimize the entire multi-carrier communications system, actual performance of the multi-carrier communications system can be reflected in a relatively accurate way.

In the embodiments of present invention, a receive end determines an SNR of each subcarrier of at least two subcarriers in a carrier according to a received modulated signal; determines a bit error rate of each subcarrier of the at least two subcarriers according to the SNR of each subcarrier of the at least two subcarriers and a correspondence between SNRs and BERs, to obtain subcarrier bit error rates; and determines a system bit error rate of a multi-carrier communications system according to the subcarrier bit error rates. Further, the receive end determines, according to the subcarrier bit error rates, a modulation format in which a to-be-modulated signal is modulated onto each subcarrier of the at least two subcarriers; determines a carrier power of each subcarrier of the at least two subcarriers according to the system bit error rate; and feeds back the determined modulation format and the determined carrier power to a transmit end. The transmit end performs modulation format and carrier power adjustment according to the modulation format and the carrier power that are fed back by the receive end.

In a multi-carrier communications system of electrical generation, determining and adjustment of a modulation format and a carrier power may be implemented by using a digital integrated chip. The digital integrated chip may be integrated into a transmit end or into a receive end. For example, the determining and adjustment may be implemented by using an ASIC (Application Specific Integrated Circuits, application-specific integrated circuit) chip, or certainly may be independent of the transmit end, for example, implemented by using an MCU (Micro Control Unit, micro control unit), or an FPGA (Field-Programmable Gate Array, field programmable gate array).

In the embodiments of the present invention, a modulation format and carrier power determining method provided in an embodiment of the present invention is first described.

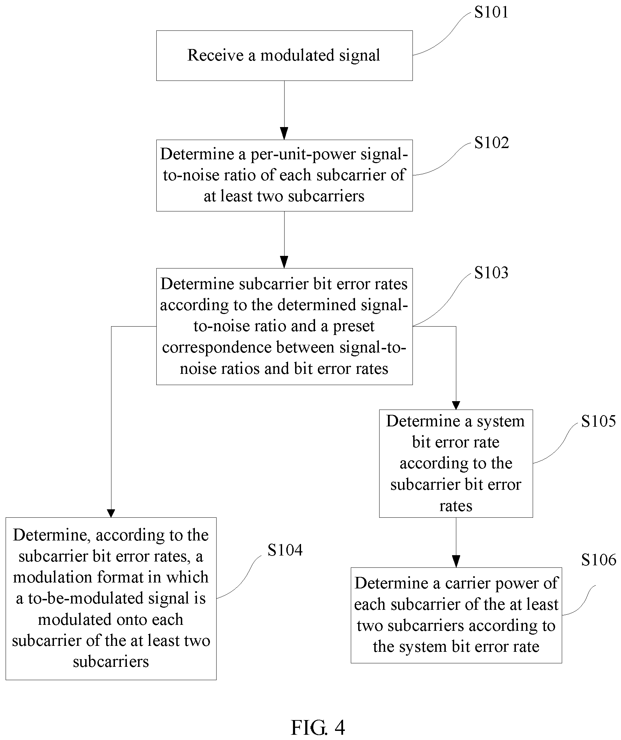

FIG. 4 shows an implementation flowchart of the modulation format and carrier power determining method provided in this embodiment of the present invention. The method may be executed by a receiver in a multi-carrier communications system, or specifically executed by components of a receiver. As shown in FIG. 4, the method includes:
S101: Receive a modulated signal.

In this embodiment of the present invention, the modulated signal is a signal that is modulated onto at least two subcarriers in a carrier (each subcarrier of at least two subcarriers in a multi-carrier), for transmission.

S102: Determine a per-unit-power SNR of each subcarrier of at least two subcarriers by using the modulated signal received in S101.

Specifically, in this embodiment of the present invention, each subcarrier of the at least two subcarriers may be initialized to obtain the per-unit-power SNR of each subcarrier of the at least two subcarriers. The initialization of the subcarriers includes initialization of subcarrier modulation formats and initialization of subcarrier powers. One of manners of initializing each subcarrier of the at least two subcarriers is to make a same modulation format for every subcarrier of the at least two subcarriers and make a same power for every subcarrier of the at least two subcarriers. For example, in this embodiment of the present invention, the modulation format of every subcarrier of the at least two subcarriers is initialized to BPSK.

S103: Determine a BER of each subcarrier of the at least two subcarriers, according to the SNR, determined in S102, of each subcarrier of the at least two subcarriers, and a preset correspondence between SNRs and BERs, to obtain subcarrier BERs.

Specifically, in this embodiment of the present invention, after the SNR and the modulation format that are of each subcarrier of the at least two subcarriers are determined, the BER of each subcarrier of the at least two subcarriers may be determined according to a correspondence between SNRs and BERs under a corresponding modulation format. In this embodiment of the present invention, the correspondence between SNRs and BERs may be determined according to a diagram of SNR and BER distribution curves obtained by means of theoretical deducing, emulation, or actual system measurement. Using the diagram of SNR and BER distribution curves to determine the correspondence between SNRs and BERs, and using the correspondence to determine the BER of each subcarrier of the at least two subcarriers make the determining of a BER easy and practical.

S104: Determine, according to the subcarrier BERs obtained in S103, a modulation format in which a to-be-modulated signal is modulated onto each subcarrier of the at least two subcarriers.

Specifically, with the modulation format determined in this embodiment of the present invention, after a to-be-modulated signal is modulated onto each subcarrier of the at least two subcarriers according to the corresponding determined modulation format, a sum of quantities of bits (a total quantity of bits) allocated to the at least two subcarriers is equal to a target quantity of bits. The target quantity of bits is set according to performance of the multi-carrier communications system.

S105: Determine a system BER of the multi-carrier communications system according to the subcarrier BERs obtained in S103.

S106: Determine a carrier power of each subcarrier of the at least two subcarriers according to the system BER obtained in S105.

Specifically, with the carrier power determined in this embodiment of the present invention, a sum of the respective carrier powers of the at least two subcarriers is equal to a target power when a signal is transmitted according to the determined carrier power. The target power is set according to the performance of the multi-carrier communications system.

It should be noted that, when this embodiment of the present invention is specifically executed, the execution may be not limited to the execution sequence of the flowchart shown in FIG. 4. For example, the process of system BER determining in S105 may be executed before the process of modulation format determining.

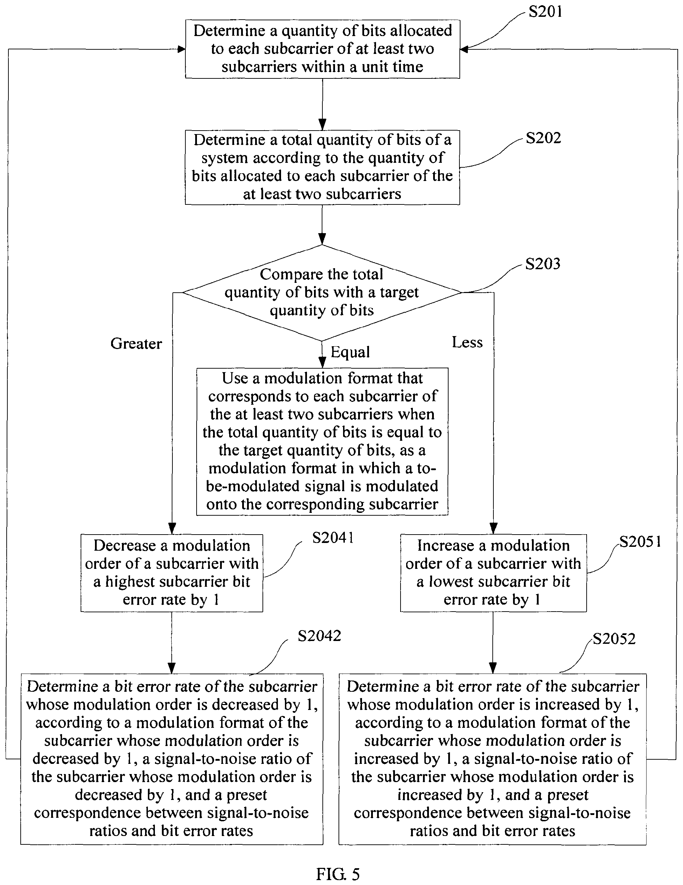

Optionally, in this embodiment of the present invention, the process of S104 in which the total quantity of bits is equal to the target quantity of bits after the modulation format in which a to-be-modulated signal is modulated onto each subcarrier of the at least two subcarriers is determined according to the determined subcarrier BERs, and after the to-be-modulated signal is modulated onto each subcarrier of the at least two subcarriers according to the corresponding determined modulation format, may be an implementation process shown in FIG. 5, including:

S201: Determine a quantity of bits allocated to each subcarrier of the at least two subcarriers within a unit time.

In this embodiment of the present invention, the unit time may be a time period specified by a user, and the time period may be, for example, 10 seconds, 20 seconds, or another numeric value.

S202: Determine the total quantity of bits of the system according to the quantity of bits allocated to each subcarrier of the at least two subcarriers.

In this embodiment of the present invention, the total quantity of bits of the system is the sum of quantities of bits allocated to the at least two subcarriers.

S203: Compare the total quantity of bits with the target quantity of bits; and if the total quantity of bits is greater than the target quantity of bits, perform S2041, or if the total quantity of bits is less than the target quantity of bits, perform S2051.

S2041: Decrease a modulation order of a subcarrier with a highest subcarrier BER by 1.

S2042: Determine a bit error rate of the subcarrier whose modulation order is decreased by 1, according to a modulation format of the subcarrier whose modulation order is decreased by 1, a signal-to-noise ratio of the subcarrier whose modulation order is decreased by 1, and the preset correspondence between signal-to-noise ratios and bit error rates; go back to perform steps S201, S202, and S203; and if the total quantity of bits is greater than the target quantity of bits, perform the foregoing steps S2041 and S2042 repeatedly until the total quantity of bits is equal to the target quantity of bits, and use a modulation format that corresponds to each subcarrier of the at least two subcarriers when the total quantity of bits is equal to the target quantity of bits as the modulation format in which the to-be-modulated signal is modulated onto the corresponding subcarrier.

S2051: Increase a modulation order of a subcarrier with a lowest subcarrier BER by 1.

S2052: Determine a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates; go back to perform steps S201, S202, and S203; and if the total quantity of bits is less than the target quantity of bits, perform the foregoing steps S2051 and S2052 repeatedly until the total quantity of bits is equal to the target quantity of bits, and use a modulation format that corresponds to each subcarrier of the at least two subcarriers when the total quantity of bits is equal to the target quantity of bits as the modulation format in which the to-be-modulated signal is modulated onto the corresponding subcarrier.

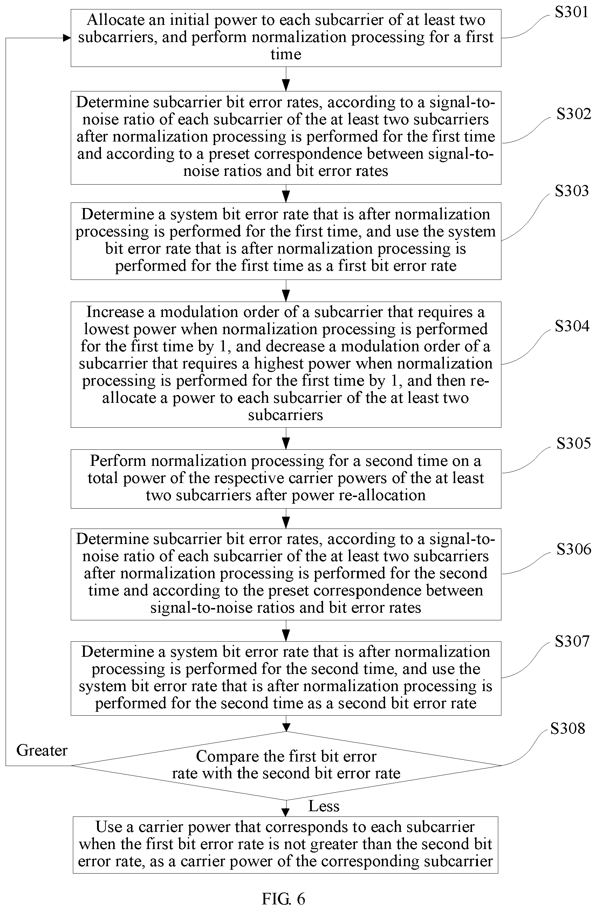

Optionally, in this embodiment of the present invention, a process of S106 in which the carrier power of each subcarrier of the at least two subcarriers is determined according to the determined system BER is shown in FIG. 6, including:

S301: Allocate an initial power to each subcarrier of the at least two subcarriers so that subcarriers with a same modulation format have a same SNR, and restrict a total power to be equal to a target power.

Specifically, in this embodiment of the present invention, the process for allocating an initial power to each subcarrier of the at least two subcarriers may be implemented in the following manner:

> A. Obtain, according to the diagram of SNR and BER distribution curves, SNR values corresponding to different modulation formats for a specified BER value, where the SNR value is denoted by SNR_thres.
> B. Determine a per-unit-power $SNR(i)$, obtained when each subcarrier of the at least two subcarriers is initialized, of each subcarrier of the at least two subcarriers, where i is a sequence number of a subcarrier.
> C. Determine a power $P(i)$, under each modulation format, of each subcarrier of the at least two subcarriers.

Specifically, in this embodiment of the present invention, the carrier power $P(i)$, under each modulation format, of each subcarrier of the at least two subcarriers may be determined according to a formula $P(i)=SNR\_thres/SNR(i)$.

Further, in this embodiment of the present invention, a total power of the respective carrier powers of the at least two subcarriers after initial power allocation is restricted to be equal to a target power, that is, $\sum \lambda * P(i) = P_{target}$, where $\lambda$ is a linear coefficient used to control the total power, $P(i)$ is the power of each subcarrier of the at least two subcarriers before power restriction, and $P_{target}$ is the target power. A power of each subcarrier of the at least two subcarriers after power control changes to $\lambda * P(i)$. In addition, a theoretical SNR value of the subcarrier after initial power allocation changes to $\lambda * P(i) * SNR(i)$.

In this embodiment of the present invention, a process in which the initial power is allocated to each subcarrier of the at least two subcarriers so that subcarriers with a same modulation format have a same SNR, and in which the total power is restricted to be equal to the target power may be referred to as a normalization process. In this embodiment of the present invention, after normalization processing is performed on the total power of the respective carrier powers of the at least two subcarriers, a sum of carrier powers, after normalization processing is performed on the total power of the respective carrier powers of the at least two subcarriers, is equal to the target power.

In this embodiment of the present invention, the normalization processing during initial power allocation is referred to as first-time normalization processing.

S302: Determine a subcarrier BER of each subcarrier of the at least two subcarriers, according to an SNR of each subcarrier of the at least two subcarriers after normalization processing is performed for a first time and according to the preset correspondence between SNRs and BERs.

S303: Determine, according to the subcarrier BER, determined in S302, of each subcarrier of the at least two subcarriers, a system BER that is after normalization processing is performed for the first time, and use the system BER that is after normalization processing is performed for the first time as a first BER.

Specifically, an implementation process for determining the system BER to obtain the first BER is: after a new SNR value of each subcarrier of the at least two subcarriers is obtained, a BER(i) of each subcarrier of the at least two subcarriers can be obtained with reference to a distribution curve corresponding to a subcarrier modulation format, where the BER(i) can be obtained from a BER-SNR relationship, and further, the system BER can be determined. The system BER may be determined in the following manner:

$$BER = \frac{\sum_{i=1}^{N} b(i)BER(i)}{\sum_{i=1}^{N} b(i)} \quad \text{where}$$

BER is the system BER, i is a sequence number of a subcarrier, N is a quantity of subcarriers in the system, BER(i) is a bit error rate of the $i^{th}$ subcarrier, and b(i) is a quantity of bits carried by the $i^{th}$ subcarrier under a corresponding modulation format. For example, in binary phase shift keying (Binary Phase Shift Keying, BPSK), b=1, and in quadrature phase shift keying (Quadrature Phase Shift Keying, QPSK), b=2, and so on.

S304: Increase a modulation order of a subcarrier that requires a lowest power when normalization processing is performed for the first time by 1, and decrease a modulation order of a subcarrier that requires a highest power when normalization processing is performed for the first time by 1, and then re-allocate a power to each subcarrier of the at least two subcarriers.

S305: Perform normalization processing for a second time on a total power of the respective carrier powers of the at least two subcarriers after power re-allocation, so that a sum of respective carrier powers of the at least two subcarriers after normalization processing is performed for the second time is equal to the target power.

S306: Determine a subcarrier BER of each subcarrier of the at least two subcarriers, according to an SNR of each subcarrier of the at least two subcarriers after normalization processing is performed for the second time and the preset correspondence between SNRs and BERs.

S307: Determine, according to the subcarrier BER, determined in S306, of each subcarrier of the at least two subcarriers, a system BER that is after normalization processing is performed for the second time, and use the system BER that is after normalization processing is performed for the second time as a second BER.

S308: Compare magnitudes of the first bit error rate and the second bit error rate.

If the first bit error rate is not greater than the second bit error rate, the process is ended, and a carrier power that corresponds to each subcarrier when the first bit error rate is not greater than the second bit error rate, is used as a carrier power of the corresponding subcarrier. If the first bit error rate is greater than the second bit error rate, the processes of S301 and S308 are repeatedly performed until the first bit error rate is not greater than the second bit error rate, and a carrier power that corresponds to each subcarrier when the first bit error rate is not greater than the second bit error rate, is used as a carrier power of the corresponding subcarrier.

The SNR-BER relationship is related to a modulation format and a code used for the subcarrier. Therefore, when different modulation formats are used for the subcarrier or different codes are used for the subcarrier, the SNR-BER relationship varies accordingly. Therefore, in this embodiment of the present invention, with waterfilling implemented according to the SNR-BER relationship, true performance of the system can be reflected more accurately.

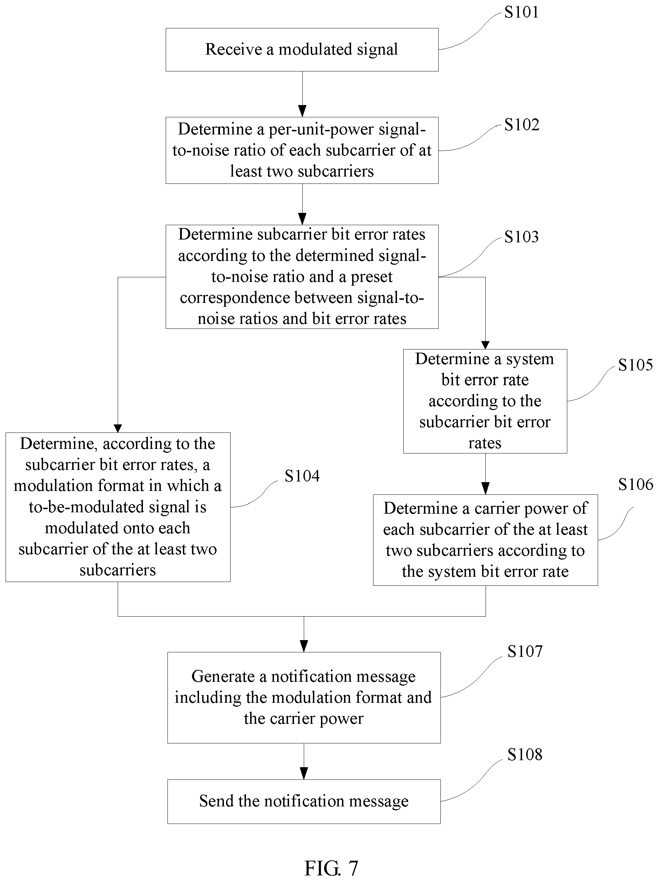

Optionally, in this embodiment of the present invention, after the modulation format in which a to-be-modulated signal is modulated onto each subcarrier of the at least two subcarriers is determined, and the carrier power of each subcarrier of the at least two subcarriers is determined, the following steps may further be included, as shown in FIG. 7:

S107: Generate a notification message including the modulation format determined in S104 and the carrier power determined in S106.

In this embodiment of the present invention, the generated notification message includes the modulation format determined in S104 and the carrier power determined in S106, where the notification message may be used for adjustment format and carrier power adjustment.

S108: Send the notification message generated in S107.

In this embodiment of the present invention, the generated notification message may be sent to a modulation format and power carrier adjusting device, for example, a transmitter, for adjustment format and carrier power adjustment, so that actual performance of the multi-carrier communications system can be reflected in a relatively accurate way.

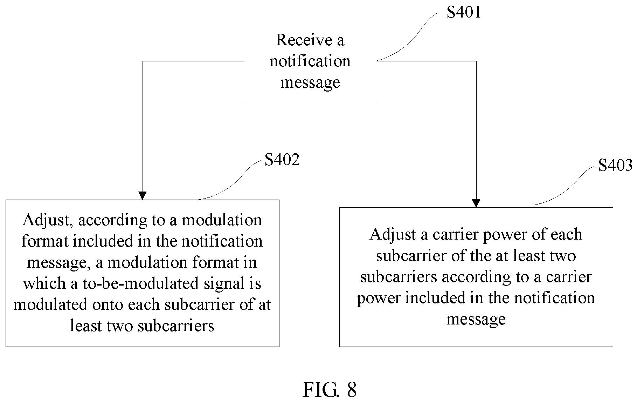

Another embodiment of the present invention provides a modulation format and carrier power adjusting method. FIG. 8 shows an implementation flowchart of the modulation format and carrier power adjusting method provided in this embodiment of the present invention. The method may be executed by a transmitter in a multi-carrier communications system, or may be executed by components of a transmitter. As shown in FIG. 8, the method includes:

S401: Receive a notification message.

In this embodiment of the present invention, the received notification message may be a feedback message for modulation format and carrier power adjustment that is fed back by a receiver in the multi-carrier communications system. The notification message includes a modulation format in which a to-be-modulated signal is modulated onto each subcarrier of at least two subcarriers and a carrier power of each subcarrier of the at least two subcarriers.

In this embodiment of the present invention, the modulation format, included in the notification message, in which a to-be-modulated signal is modulated onto each subcarrier of at least two subcarriers is determined according to a subcarrier bit error rate of each subcarrier of the at least two subcarriers. The subcarrier bit error rate is determined according to a per-unit-power signal-to-noise ratio of the corresponding subcarrier and a preset correspondence between signal-to-noise ratios and bit error rates.

In this embodiment of the present invention, the carrier power, included in the notification message, of each subcarrier of the at least two subcarriers is determined according to a system bit error rate of the multi-carrier communications system. The system bit error rate is determined according to the subcarrier bit error rate of each subcarrier of the at least two subcarriers.

For a specific manner of modulation format and carrier power determining in this embodiment of the present invention, reference may be made to related descriptions in the foregoing embodiment and FIG. 4. Details are not repeatedly described herein.

S402: Adjust, according to the modulation format included in the notification message received in S401, a modulation format in which a to-be-modulated signal is modulated onto each subcarrier of at least two subcarriers.

In this embodiment of the present invention, when modulation format adjustment is specifically performed, the to-be-modulated signal is modulated onto each subcarrier of the at least two subcarriers in the modulation format included in the notification message. An existing execution manner may be used as the specific modulation scheme, and details are not further elaborated herein.

S403: Adjust a carrier power of each subcarrier of the at least two subcarriers according to the carrier power included in the notification message received in S402.

In this embodiment of the present invention, when modulation format adjustment is specifically performed, a signal carried on each subcarrier of the at least two subcarriers is transmitted at the carrier power included in the notification message.

It should be noted that, in this embodiment of the present invention, S403 may be performed before S402, and a sequence for performing the foregoing steps is not limited.

According to this embodiment of the present invention, a modulation format based on which modulation format adjustment is performed is determined according to a subcarrier bit error rate of each subcarrier of at least two subcarriers, and a carrier power based on which carrier power adjustment is performed is determined according to a system bit error rate. The system bit error rate is determined according to the subcarrier bit error rates. The subcarrier bit error rate is determined according to a per-unit-power signal-to-noise ratio of the subcarrier and a preset correspondence between signal-to-noise ratios and bit error rates. However, a relationship between signal-to-noise ratios and bit error rates is related to a modulation format and a code used for the subcarrier. Therefore, when different modulation formats are used for the subcarrier or different codes are used for the subcarrier, the relationship between signal-to-noise ratios and bit error rates varies accordingly. Therefore, in this embodiment of the present invention, with water-filling implemented according to the relationship between signal-to-noise ratios and bit error rates, true performance of a multi-carrier communications system can be reflected more accurately.

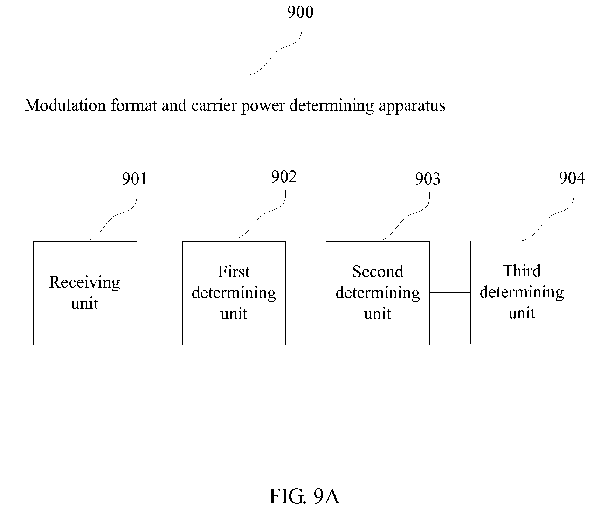

Based on the modulation format and carrier power determining method provided in the foregoing embodiment, an embodiment of the present invention provides a modulation format and carrier power determining apparatus 900. As shown in FIG. 9A, the apparatus 900 includes a receiving unit 901, a first determining unit 902, a second determining unit 903, and a third determining unit 904.

The receiving unit 901 is configured to receive a modulated signal, where the modulated signal is a signal modulated onto at least two subcarriers of a carrier for transmission.

The first determining unit 902 is configured to determine a per-unit-power signal-to-noise ratio of each subcarrier of the at least two subcarriers by using the modulated signal received by the receiving unit 901.

The second determining unit 903 is configured to: determine a bit error rate of each subcarrier of the at least two subcarriers, according to the per-unit-power signal-to-noise ratio that is of each subcarrier of the at least two subcarriers and determined by the first determining unit 902, and according to a preset correspondence between signal-to-noise ratios and bit error rates, to obtain subcarrier bit error rates; and determine a system bit error rate of a multi-carrier communications system according to the subcarrier bit error rates.

The third determining unit 904 is configured to: determine, according to the subcarrier bit error rates determined by the second determining unit 903, a modulation format in which a to-be-modulated signal is modulated onto each subcarrier of the at least two subcarriers; and determine a carrier power of each subcarrier of the at least two subcarriers according to the system bit error rate determined by the second determining unit 903.

With reference to the foregoing provided modulation format and carrier power determining apparatus, in a first implementation manner, the third determining unit 904 is specifically configured to determine, in a following manner according to the subcarrier bit error rates, the modulation format in which a to-be-modulated signal is modulated onto each subcarrier of the at least two subcarriers:

increasing a modulation order of a subcarrier with a lowest subcarrier bit error rate by 1;

determining a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates;

determining a quantity of bits currently allocated to each subcarrier of the at least two subcarriers;

determining a total quantity of bits according to the quantity of bits allocated to each subcarrier of the at least two subcarriers, where the total quantity of bits is a sum of the quantities of bits allocated to the at least two subcarriers;

comparing the total quantity of bits with a specified target quantity of bits; and

if the total quantity of bits is less than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier;

or

decreasing a modulation order of a subcarrier with a highest subcarrier bit error rate by 1;

determining a bit error rate of the subcarrier whose modulation order is decreased by 1, according to a modulation format of the subcarrier whose modulation order is increased by 1, a signal-to-noise ratio of the subcarrier whose modulation order is increased by 1, and the preset correspondence between signal-to-noise ratios and bit error rates;

determining a quantity of bits allocated to each subcarrier of the at least two subcarriers within a unit time;

determining a total quantity of bits according to the quantity of bits allocated to each subcarrier of the at least two subcarriers, where the total quantity of bits is a sum of the quantities of bits allocated to the at least two subcarriers;

comparing the total quantity of bits with a specified target quantity of bits; and

if the total quantity of bits is greater than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

In a second implementation manner, the third determining unit 904 is specifically configured to determine the carrier power of each subcarrier of the at least two subcarriers according to the system bit error rate in the following manner:

allocating an initial power to each subcarrier of the at least two subcarriers, and performing normalization processing for a first time on a total power of the respective carrier powers of the at least two subcarriers after initial power allocation, where subcarriers after initial power allocation that have a same modulation format have a same signal-to-noise ratio, and a sum of carrier powers, after normalization processing is performed on the total power of the respective carrier powers of the at least two subcarriers after initial power allocation, is equal to a specified target power;

determining a subcarrier bit error rate of each subcarrier of the at least two subcarriers, according to a signal-to-noise ratio of each subcarrier of the at least two subcarriers after normalization processing is performed for the first time and according to the preset correspondence between signal-to-noise ratios and bit error rates;

determining, according to the subcarrier bit error rate of each subcarrier of the at least two subcarriers, a system bit error rate that is after normalization processing is performed for the first time, and using the system bit error rate that is after normalization processing is performed for the first time as a first bit error rate;

increasing a modulation order of a subcarrier that requires a lowest power when the normalization processing is performed by 1, and decreasing a modulation order of a subcarrier that requires a highest power when the normalization processing is performed by 1, and then re-allocating a power to each subcarrier of the at least two subcarriers;

performing normalization processing for a second time on a total power of the respective carrier powers of the at least two subcarriers after power re-allocation;

determining a subcarrier bit error rate of each subcarrier of the at least two subcarriers, according to a signal-to-noise ratio of each subcarrier of the at least two subcarriers after normalization processing is performed for the second time and according to the preset correspondence between signal-to-noise ratios and bit error rates;

determining, according to the subcarrier bit error rate of each subcarrier of the at least two subcarriers, a system bit error rate that is after normalization processing is performed for the second time, and using the system bit error rate that is after normalization processing is performed for the second time as a second bit error rate;

comparing magnitudes of the first bit error rate and the second bit error rate; and

if the first bit error rate is greater than the second bit error rate, performing the foregoing steps repeatedly until the first bit error rate is not greater than the second bit error rate, and using a carrier power that corresponds to each subcarrier of the at least two subcarriers when the first bit error rate is not greater than the second bit error rate as a carrier power of the corresponding subcarrier.

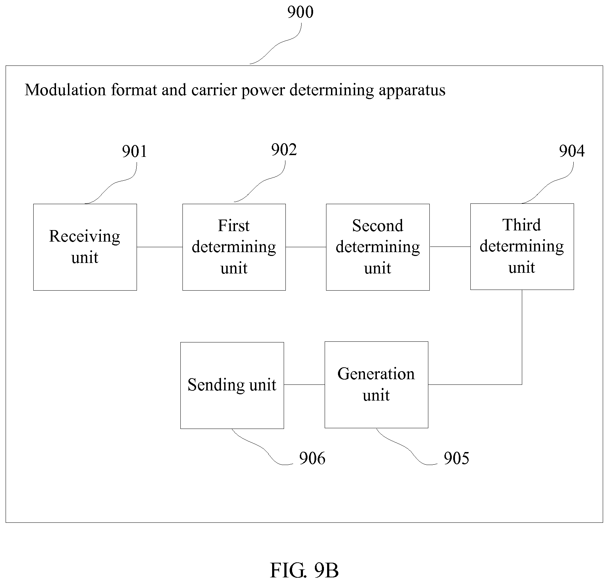

In a third implementation manner, the modulation format and carrier power determining apparatus provided in this embodiment of the present invention further includes a generation unit 905 and a sending unit 906, as shown in FIG. 9B.

The generation unit 905 is configured to: after the third determining unit 904 determines the modulation format in which a to-be-modulated signal is modulated onto each subcarrier of the at least two subcarriers, and determines the carrier power of each subcarrier of the at least two subcarriers, generate a notification message including the modulation format and the carrier power.

The sending unit 96 is configured to send the notification message that is generated by the generation unit 905.

The modulation format and carrier power determining apparatus provided in this embodiment of the present invention determines a bit error rate of each subcarrier of at least two subcarriers according to a signal-to-noise ratio, to obtain subcarrier bit error rates; determines a system bit error rate according to the obtained subcarrier bit error rates; determines a modulation format in which a to-be-modulated signal is modulated onto each subcarrier of the at least two subcarriers according to the determined subcarrier bit error rates; and determines a carrier power of each subcarrier of the at least two subcarriers according to the system bit error rate. The bit error rate is related to both noise distribution and codes used for the subcarriers, and can reflect actual performance of a multi-carrier communications system. Therefore, in the present invention, with adjustment format and carrier power determining and water-filling performed according to a correspondence between signal-to-noise ratios and bit error rates, the actual performance of the multi-carrier communications system can be reflected in a relatively accurate way.

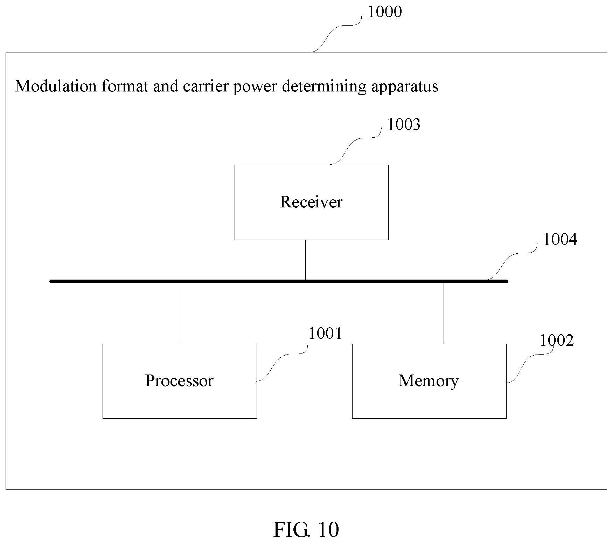

Based on the modulation format and carrier power determining method and apparatus provided in the embodiments of the present invention, an embodiment of the present invention further provides a modulation format and carrier power determining apparatus 1000. As shown in FIG. 10, the modulation format and carrier power determining apparatus 1000 includes a processor 1001, a memory 1002, a transceiver 1003, and a bus 1004. Both the transceiver 1003 and the memory 1002 are connected to the processor 1001 by using the bus 1004.

The memory 1002 is configured to store program code for execution by the processor 1001. The processor 1001 is configured to call the program code stored in the memory 1002 to implement the following functions:

receiving a modulated signal by using the transceiver 1003; determining a signal-to-noise ratio of each subcarrier of at least two subcarriers by using the modulated signal; determining a bit error rate of each subcarrier of the at least two subcarriers according to the determined signal-to-noise ratio and a preset correspondence between signal-to-noise ratios and bit error rates, to obtain subcarrier bit error rates; determining, according to the subcarrier bit error rates, a modulation format in which a to-be-modulated signal is modulated onto each subcarrier of the at least two subcarriers; determining a system bit error rate of a multi-carrier communications system according to the subcarrier bit error rates; and determining a carrier power of each subcarrier of the at least two subcarriers according to the determined system bit error rate.

In a first implementation manner, the processor 1001 is specifically configured to determine, in a following manner according to the subcarrier bit error rates, the modulation format in which a to-be-modulated signal is modulated onto each subcarrier of the at least two subcarriers:

increasing a modulation order of a subcarrier with a lowest subcarrier bit error rate by 1;

determining a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates;

determining a quantity of bits currently allocated to each subcarrier of the at least two subcarriers;

determining a total quantity of bits according to the quantity of bits allocated to each subcarrier of the at least two subcarriers, where the total quantity of bits is a sum of the quantities of bits allocated to the at least two subcarriers;

comparing the total quantity of bits with a specified target quantity of bits; and

if the total quantity of bits is less than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier;

or

decreasing a modulation order of a subcarrier with a highest subcarrier bit error rate by 1;

determining a bit error rate of the subcarrier whose modulation order is decreased by 1, according to a modulation format of the subcarrier whose modulation order is increased by 1, a signal-to-noise ratio of the subcarrier whose modulation order is increased by 1, and the preset correspondence between signal-to-noise ratios and bit error rates;

determining a quantity of bits allocated to each subcarrier of the at least two subcarriers within a unit time;

determining a total quantity of bits according to the quantity of bits allocated to each subcarrier of the at least two subcarriers, where the total quantity of bits is a sum of the quantities of bits allocated to the at least two subcarriers;

comparing the total quantity of bits with a specified target quantity of bits; and

if the total quantity of bits is greater than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

In a second implementation manner, the processor 1001 is specifically configured to determine the carrier power of each subcarrier of the at least two subcarriers according to the system bit error rate in the following manner:

allocating an initial power to each subcarrier of the at least two subcarriers, and performing normalization processing for a first time on a total power of the respective carrier powers of the at least two subcarriers after initial power allocation, where subcarriers after initial power allocation that have a same modulation format have a same signal-to-noise ratio, and a sum of carrier powers, after normalization processing is performed on the total power of the respective carrier powers of the at least two subcarriers after initial power allocation, is equal to a specified target power;

determining a subcarrier bit error rate of each subcarrier of the at least two subcarriers, according to a signal-to-noise ratio of each subcarrier of the at least two subcarriers after normalization processing is performed for the first time and according to the preset correspondence between signal-to-noise ratios and bit error rates;

determining, according to the subcarrier bit error rate of each subcarrier of the at least two subcarriers, a system bit error rate that is after normalization processing is performed for the first time, and using the system bit error rate that is after normalization processing is performed for the first time as a first bit error rate;

increasing a modulation order of a subcarrier that requires a lowest power when the normalization processing is performed by 1, and decreasing a modulation order of a subcarrier that requires a highest power when the normalization processing is performed by 1, and then re-allocating a power to each subcarrier of the at least two subcarriers;

performing normalization processing for a second time on a total power of the respective carrier powers of the at least two subcarriers after power re-allocation;

determining a subcarrier bit error rate of each subcarrier of the at least two subcarriers, according to a signal-to-noise ratio of each subcarrier of the at least two subcarriers after normalization processing is performed for the second time and according to the preset correspondence between signal-to-noise ratios and bit error rates;

determining, according to the subcarrier bit error rate of each subcarrier of the at least two subcarriers, a system bit error rate that is after normalization processing is performed for the second time, and using the system bit error rate that is after normalization processing is performed for the second time as a second bit error rate;

comparing magnitudes of the first bit error rate and the second bit error rate; and

if the first bit error rate is greater than the second bit error rate, performing the foregoing steps repeatedly until the first bit error rate is not greater than the second bit error rate, and using a carrier power that corresponds to each subcarrier of the at least two subcarriers when the first bit error rate is not greater than the second bit error rate as a carrier power of the corresponding subcarrier.

In a third implementation manner, the processor 1001 is further configured to: after determining the modulation format in which a to-be-modulated signal is modulated onto each subcarrier of the at least two subcarriers, and determining the carrier power of each subcarrier of the at least two subcarriers, generate a notification message including the modulation format and the carrier power, and send the generated notification message by using the transceiver 1003.

The modulation format and carrier power determining apparatus provided in this embodiment of the present invention determines a bit error rate of each subcarrier of at least two subcarriers according to a signal-to-noise ratio, to obtain subcarrier bit error rates; determines a system bit error rate according to the obtained subcarrier bit error rates; determines a modulation format in which a to-be-modulated signal is modulated onto each subcarrier of the at least two subcarriers according to the determined subcarrier bit error rates; and determines a carrier power of each subcarrier of the at least two subcarriers according to the system bit error rate. The bit error rate is related to both noise distribution and codes used for the subcarriers, and can reflect actual performance of a multi-carrier communications system. Therefore, in the present invention, with adjustment format and carrier power determining and water-filling performed according to a correspondence between signal-to-noise ratios and bit error rates, the actual performance of the multi-carrier communications system can be reflected in a relatively accurate way.

It should be noted that, the modulation format and carrier power determining apparatuses shown in FIG. 9A, FIG. 9B, and FIG. 10 of the embodiments of the present invention may be configured to perform the related method shown in FIG. 4 to FIG. 7 of the embodiments of the present invention. Therefore, for what is not thorough described about the modulation format and carrier power determining apparatus in this embodiment of the present invention, reference may be made to related descriptions of FIG. 4 to FIG. 7. Details are not repeatedly described herein.

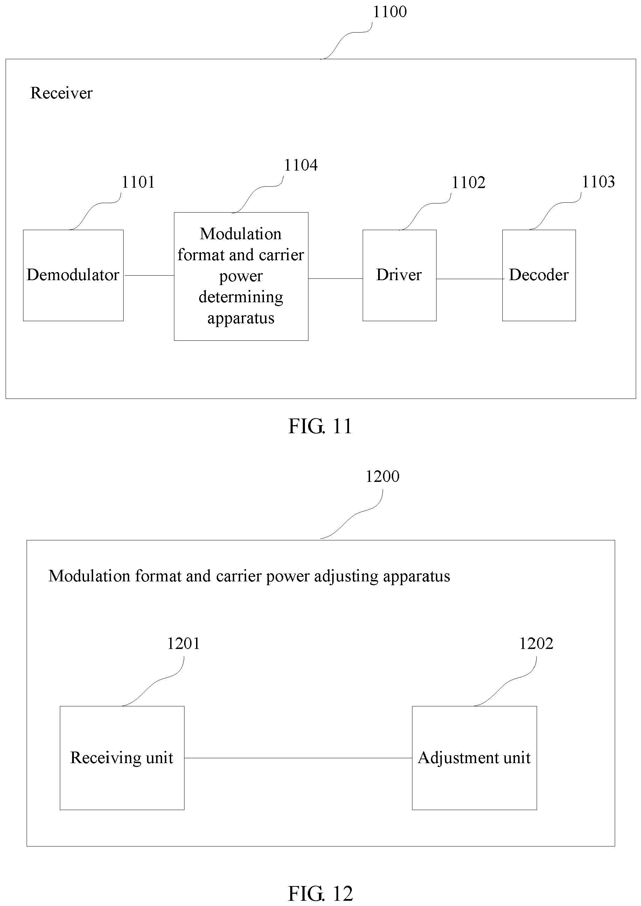

With reference to the modulation format and carrier power determining apparatus provided in the foregoing embodiment, an embodiment of the present invention further provides a receiver 1100. As shown in FIG. 11, the receiver 1100 includes a demodulator 1101, a driver 1102, and a decoder 1103, and further includes a modulation format and carrier power determining apparatus 1104.

The demodulator 1101 is configured to receive a multi-carrier signal and perform demodulation to obtain a modulated signal.

The driver 1102 is configured to transfer the modulated signal obtained by means of demodulation by the demodulator 1101 to the modulation format and carrier power determining apparatus 1104.

The modulation format and carrier power determining apparatus 1104 is configured to: receive the modulated signal transferred by the driver 1102; process the modulated signal; determine a modulation format in which a to-be-modulated signal is modulated onto each subcarrier of at least two subcarriers and a carrier power of each subcarrier of the at least two subcarriers; and generate and send a notification message including the modulation format and the carrier power.

The decoder 1103 is configured to decode the modulated signal processed by the modulation format and carrier power determining apparatus 1104 and output a decoded signal.

For the corresponding functions implemented by the demodulator 1101, the driver 1102, and the decoder 1103 that are included in the receiver provided in this embodiment of the present invention, reference may be made to existing implementation manners. The modulation format and carrier power determining apparatus 1104 may be the modulation format and carrier power determining apparatus shown in FIG. 9B and FIG. 10, and is provided with the corresponding functions. For descriptions of the corresponding functions specifically implemented by the modulation format and carrier power determining apparatus 1104, reference may be made to descriptions of related method embodiment. Details are not repeatedly described herein.

The modulation format and carrier power determining apparatus included in the receiver provided in this embodiment of the present invention determines a bit error rate of each subcarrier of at least two subcarriers according to a signal-to-noise ratio, to obtain subcarrier bit error rates; determines a system bit error rate according to the obtained subcarrier bit error rates; determines a modulation format in which a to-be-modulated signal is modulated onto each subcarrier of the at least two subcarriers according to the determined subcarrier bit error rates; and determines a carrier power of each subcarrier of the at least two subcarriers according to the system bit error rate. The bit error rate is related to both noise distribution and codes used for the subcarriers, and can reflect actual performance of a multi-carrier communications system. Therefore, in the present invention, with adjustment format and carrier power determining and water-filling performed according to a correspondence between signal-to-noise ratios and bit error rates, the actual performance of the multi-carrier communications system can be reflected in a relatively accurate way.

With reference to the modulation format and carrier power adjusting method provided in the foregoing embodiment, an embodiment of the present invention further provides a modulation format and carrier power adjusting apparatus 1200. As shown in FIG. 12, the adjustment apparatus 1200 includes a receiving unit 1201 and an adjustment unit 1202.

The receiving unit 1201 is configured to receive a notification message, where the notification message includes a modulation format in which a to-be-modulated signal is modulated onto each subcarrier of at least two subcarriers, and a carrier power of each subcarrier of the at least two subcarriers.

The adjustment unit 1202 is configured to: adjust, according to the modulation format included in the notification message received by the receiving unit 1201, a modulation format in which the to-be-modulated signal is modulated onto each subcarrier of the at least two subcarriers; and adjust a carrier power of each subcarrier of the at least two subcarriers according to the carrier power included in the notification message received by the receiving unit.

The modulation format, included in the notification message, in which a to-be-modulated signal is modulated onto each subcarrier of the at least two subcarriers is determined according to a subcarrier bit error rate of each subcarrier of the at least two subcarriers. The subcarrier bit error rate is determined according to a per-unit-power signal-to-noise ratio of the corresponding subcarrier and a preset correspondence between signal-to-noise ratios and bit error rates.

The carrier power, included in the notification message, of each subcarrier of the at least two subcarriers is determined according to a system bit error rate of the multi-carrier communications system. The system bit error rate is determined according to the subcarrier bit error rate of each subcarrier of the at least two subcarriers.

The modulation format and carrier power adjusting apparatus provided in this embodiment of the present invention determines, according to a subcarrier bit error rate of each subcarrier of at least two subcarriers, a modulation format based on which modulation format adjustment is performed, and determines, according to a system bit error rate, a carrier power based on which carrier power adjustment is performed. The system bit error rate is determined according to the subcarrier bit error rates. The subcarrier bit error rate is determined according to a per-unit-power signal-to-noise ratio of the subcarrier and a preset correspondence between signal-to-noise ratios and bit error rates. However, a relationship between signal-to-noise ratios and bit error rates is related to a modulation format and a code used for the subcarrier. Therefore, when different modulation formats are used for the subcarrier or different codes are used for the subcarrier, the relationship between signal-to-noise ratios and bit error rates varies accordingly. Therefore, in this embodiment of the present invention, with water-filling implemented according to the relationship between signal-to-noise ratios and bit error rates, true performance of a multi-carrier communications system can be reflected more accurately.

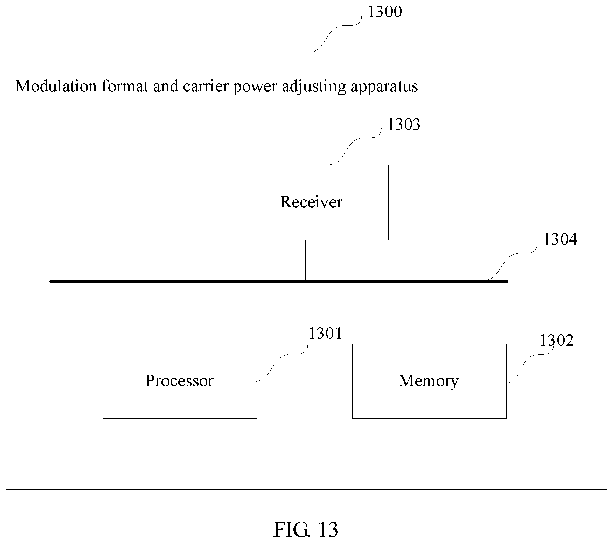

Based on the modulation format and carrier power adjusting method and apparatus provided in the foregoing embodiments, an embodiment of the present invention further provides a modulation format and carrier power adjusting apparatus 1300. As shown in FIG. 13, the adjustment apparatus 1300 includes a processor 1301, a memory 1302, a receiver 1303, and a bus 1304. The processor 1301, the memory 1302, and the receiver 1303 are all connected to the bus 1304.

The memory 1302 is configured to store program code for execution by the processor 1301. The processor 1301 is configured to call the program code stored in the memory 1302 to implement the following functions:

receiving a notification message by using the receiver 1303, where the notification message includes a modulation format in which a to-be-modulated signal is modulated onto each subcarrier of at least two subcarriers, and a carrier power of each subcarrier of the at least two subcarriers; and
adjusting, according to the modulation format included in the received notification message, a modulation format in which the to-be-modulated signal is modulated onto each subcarrier of the at least two subcarriers, and adjusting a carrier power of each subcarrier of the at least two subcarriers according to the carrier power included in the notification message received by the receiving unit.

The modulation format, included in the notification message, in which a to-be-modulated signal is modulated onto each subcarrier of the at least two subcarriers is determined according to a subcarrier bit error rate of each subcarrier of the at least two subcarriers. The subcarrier bit error rate is determined according to a per-unit-power signal-to-noise ratio of the corresponding subcarrier and a preset correspondence between signal-to-noise ratios and bit error rates.

The carrier power, included in the notification message, of each subcarrier of the at least two subcarriers is determined according to a system bit error rate of the multi-carrier communications system. The system bit error rate is determined according to the subcarrier bit error rate of each subcarrier of the at least two subcarriers.

The modulation format and carrier power adjusting apparatus provided in this embodiment of the present invention determines, according to a subcarrier bit error rate of each subcarrier of at least two subcarriers, a modulation format based on which modulation format adjustment is performed, and determines, according to a system bit error rate, a carrier power based on which carrier power adjustment is performed. The system bit error rate is determined according to the subcarrier bit error rates. The subcarrier bit error rate is determined according to a per-unit-power signal-to-noise ratio of the subcarrier and a preset correspondence between signal-to-noise ratios and bit error rates. However, a relationship between signal-to-noise ratios and bit error rates is related to a modulation format and a code used for the subcarrier. Therefore, when different modulation formats are used for the subcarrier or different codes are used for the subcarrier, the relationship between signal-to-noise ratios and bit error rates varies accordingly. Therefore, in this embodiment of the present invention, with water-filling implemented according to the relationship between signal-to-noise ratios and bit error rates, true performance of a multi-carrier communications system can be reflected more accurately.

It should be noted that, the modulation format and carrier power adjusting apparatuses shown in FIG. 12 and FIG. 13 in the embodiments of the present invention can be configured to perform the related method shown in FIG. 8 of the embodiments of the present invention. Therefore, for what is not thorough described about the modulation format and carrier power determining apparatus in this embodiment of the present invention, reference may be made to related descriptions of FIG. 8. Details are not repeatedly described herein.

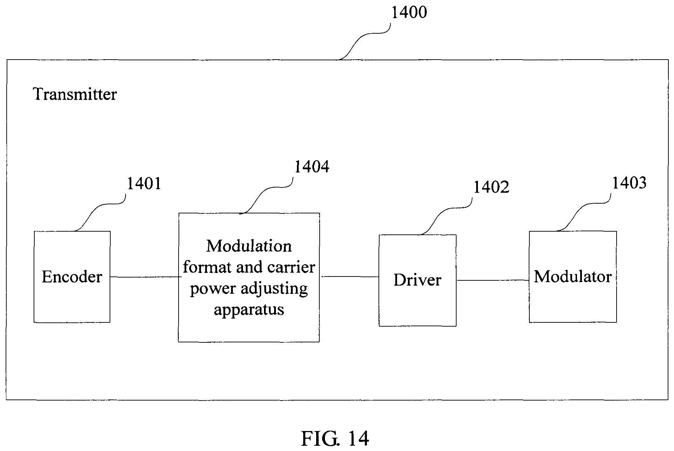

With reference to the modulation format and carrier power adjusting method and apparatus provided in the foregoing embodiment, an embodiment of the present invention further provides a transmitter 1400. As shown in FIG. 14, the transmitter 1400 includes an encoder 1401, a driver 1402, and a modulator 1403, and further includes a modulation format and carrier power adjusting apparatus 1404.

The encoder 1401 is configured to receive a bit stream, and encode the received bit stream.

The modulation format and carrier power adjusting apparatus 1404 is configured to: receive a bit stream obtained by means of encoding by the encoder 1401; perform data processing on the encoded bit stream to form at least two subcarriers; and adjust, according to a received notification message, a modulation format in which a to-be-modulated signal is modulated onto each subcarrier of the at least two subcarriers and a carrier power of each subcarrier of the at least two subcarriers, where the notification message includes a modulation format in which the to-be-modulated signal is modulated onto each subcarrier of the at least two subcarriers and a carrier power of each subcarrier of the at least two subcarriers.

The driver 1402 is configured to transfer the multiple carriers formed by means of processing by the modulation format and carrier power adjusting apparatus 1404 and modulation format and carrier power adjustment values to the modulator 1403.

The modulator 1403 is configured to modulate the to-be-modulated signal onto the multiple carriers.

For the corresponding functions implemented by the encoder 1401, the driver 1402, and the modulator 1403 that are included in the transmitter provided in this embodiment of the present invention, reference may be made to existing implementation manners. The modulation format and carrier power adjusting apparatus 1404 may be the modulation format and carrier power adjusting apparatus shown in FIG. 12 or FIG. 13, and is provided with the corresponding functions. For descriptions of the corresponding functions specifically implemented by the modulation format and carrier power adjusting apparatus 1404, reference may be made to descriptions of the related method embodiment. Details are not repeatedly described herein.

The modulation format and carrier power adjusting apparatus included in the transmitter provided in this embodiment of the present invention determines, according to a subcarrier bit error rate of each subcarrier of at least two subcarriers, a modulation format based on which modulation format adjustment is performed, and determines, according to a system bit error rate, a carrier power based on which carrier power adjustment is performed. The system bit error rate is determined according to the subcarrier bit error rates. The subcarrier bit error rate is determined according to a per-unit-power signal-to-noise ratio of the subcarrier and a preset correspondence between signal-to-noise ratios and bit error rates. However, a relationship between signal-to-noise ratios and bit error rates is related to a modulation format and a code used for the subcarrier. Therefore, when different modulation formats are used for the subcarrier or different codes are used for the subcarrier, the relationship between signal-to-noise ratios and bit error rates varies accordingly. Therefore, in this embodiment of the present invention, with water-filling implemented according to the relationship between signal-to-noise ratios and bit error rates, true performance of a multi-carrier communications system can be reflected more accurately.

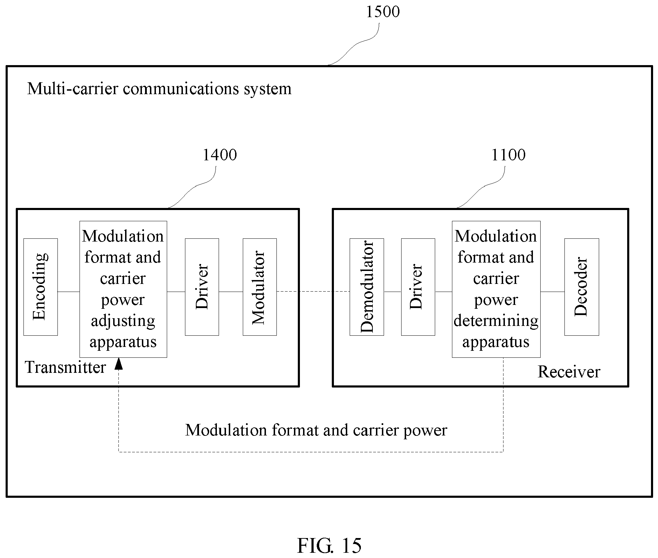

With reference to the receiver and the transmitter provided in the foregoing embodiments, an embodiment of the present invention further provides a multi-carrier communications system 1500, as shown in FIG. 15, including a receiver 1100 and a transmitter 1400.

The receiver 1100 is configured to: determine a per-unit-power signal-to-noise ratio of each subcarrier of at least two subcarriers by using a modulated signal; determine a bit error rate of each subcarrier of the at least two subcarriers according to the signal-to-noise ratio and a preset correspondence between signal-to-noise ratios and bit error rates, to obtain subcarrier bit error rates; determine, according to the subcarrier bit error rates, a modulation format in which a to-be-modulated signal is modulated onto each subcarrier of the at least two subcarriers; determine a system bit error rate of the multi-carrier communications system according to the subcarrier bit error rates; determine a carrier power of each subcarrier of the at least two subcarriers according to the system bit error rate; generate a notification message including the modulation format and the carrier power; and feed back the notification message to the transmitter 1400.

The transmitter 1400 receives the notification message; adjusts, according to the modulation format included in the notification message, a modulation format in which the to-be-modulated signal is modulated onto each subcarrier of the at least two subcarriers; and adjusts a carrier power of each subcarrier of the at least two subcarriers according to the carrier power included in the notification message.

In the multi-carrier communications system provided in this embodiment of the present invention, a receiver determines a bit error rate of each subcarrier of at least two subcarriers according to a signal-to-noise ratio, to obtain subcarrier bit error rates; determines a system bit error rate according to the obtained subcarrier bit error rates; determines, according to the determined subcarrier bit error rates, a modulation format in which a to-be-modulated signal is modulated onto each subcarrier of the at least two subcarriers; determines a carrier power of each subcarrier of the at least two subcarriers according to the system bit error rate; generates a notification message including the modulation format and the carrier power; and feeds back the notification message to a transmitter. The transmitter performs modulation format and carrier power adjustment according to the notification message fed back by the receiver. The bit error rate is related to both noise distribution and codes used for the subcarriers, and can reflect actual performance of the multi-carrier communications system. Therefore, in the present invention, with adjustment format and carrier power determining and water-filling performed according to a correspondence between signal-to-noise ratios and bit error rates, the actual performance of the multi-carrier communications system can be reflected in a relatively accurate way.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus.

The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams. Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

## Claims

1. A modulation format and carrier power determining method, applied to a multi-carrier communications system and comprising:

   receiving (S101) a modulated signal, wherein the modulated signal is a signal modulated onto at least two subcarriers of a carrier for transmission;
   determining (S102) a per-unit-power signal-to-noise ratio of each subcarrier of the at least two subcarriers by using the modulated signal;
   determining (S103) a bit error rate of each subcarrier of the at least two subcarriers according to the signal-to-noise ratio and a preset correspondence between signal-to-noise ratios and bit error rates determined according to a diagram of signal-to-noise ratio and bit error rate distribution curves, to obtain subcarrier bit error rates;
   determining (SI04), according to the subcarrier bit error rates, a modulation format in which a to-be-modulated signal is modulated onto each subcarrier of the at least two subcarriers; and
   determining (SI05) a system bit error rate of the multi-carrier communications system according to the subcarrier bit error rates, and determining (S106) a carrier power of each subcarrier of the at least two subcarriers according to the system bit error rate.

2. The method according to claim 1, wherein the determining (SI04), according to the subcarrier bit error rates, a modulation format in which a to-be-modulated signal is modulated onto each subcarrier of the at least two subcarriers comprises:

increasing (S2051) a modulation order of a subcarrier with a lowest subcarrier bit error rate by 1;
determining (S2052) a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates;
determining (S201) a quantity of bits allocated to each subcarrier of the at least two subcarriers within a unit time;
determining (S202) a total quantity of bits according to the quantity of bits allocated to each subcarrier of the at least two subcarriers, wherein the total quantity of bits is a sum of the quantities of bits allocated to the at least two subcarriers;
comparing (S203) the total quantity of bits with a specified target quantity of bits; and
if the total quantity of bits is less than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

3. The method according to claim 1, wherein the determining (S104), according to the subcarrier bit error rates, a modulation format in which a to-be-modulated signal is modulated onto each subcarrier of the at least two subcarriers comprises:

decreasing (S2041) a modulation order of a subcarrier with a highest subcarrier bit error rate by 1;
determining (S2042) a bit error rate of the subcarrier whose modulation order is decreased by 1, according to a modulation format of the subcarrier whose modulation order is increased by 1, a signal-to-noise ratio of the subcarrier whose modulation order is increased by 1, and the preset correspondence between signal-to-noise ratios and bit error rates;
determining (S201) a quantity of bits allocated to each subcarrier of the at least two subcarriers within a unit time;
determining (S202) a total quantity of bits according to the quantity of bits allocated to each subcarrier of the at least two subcarriers, wherein the total quantity of bits is a sum of the quantities of bits allocated to the at least two subcarriers;
comparing (S203) the total quantity of bits with a specified target quantity of bits; and
if the total quantity of bits is greater than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

4. The method according to any one of claims 1 to 3, wherein the determining (S106) a carrier power of each subcarrier of the at least two subcarriers according to the system bit error rate comprises:

allocating (S301) an initial power to each subcarrier of the at least two subcarriers, and performing normalization processing for a first time on a total power of the respective carrier powers of the at least two subcarriers after initial power allocation, wherein subcarriers after initial power allocation that have a same modulation format have a same signal-to-noise ratio, and a sum of carrier powers, after normalization processing is performed on the total power of the respective carrier powers of the at least two subcarriers after initial power allocation, is equal to a specified target power;
determining (S302) a subcarrier bit error rate of each subcarrier of the at least two subcarriers, according to a signal-to-noise ratio of each subcarrier of the at least two subcarriers after normalization processing is performed for the first time and according to the preset correspondence between signal-to-noise ratios and bit error rates;
determining (S303), according to the subcarrier bit error rate of each subcarrier of the at least two subcarriers, a system bit error rate that is after normalization processing is performed for the first time, and using the system bit error rate that is after normalization processing is performed for the first time as a first bit error rate;
increasing (S304) a modulation order of a subcarrier that requires a lowest power when normalization processing is performed for the first time by 1, and decreasing a modulation order of a subcarrier that requires a highest power when normalization processing is performed for the first time by 1, and then re-allocating a power to each subcarrier of the at least two subcarriers;
performing (S305) normalization processing for a second time on a total power of the respective carrier powers of the at least two subcarriers after power re-allocation;

determining (S306) a subcarrier bit error rate of each subcarrier of the at least two subcarriers, according to a signal-to-noise ratio of each subcarrier of the at least two subcarriers after normalization processing is performed for the second time and according to the preset correspondence between signal-to-noise ratios and bit error rates;

determining (S307), according to the subcarrier bit error rate of each subcarrier of the at least two subcarriers, a system bit error rate that is after normalization processing is performed for the second time, and using the system bit error rate that is after normalization processing is performed for the second time as a second bit error rate;

comparing (S308) magnitudes of the first bit error rate and the second bit error rate; and

if the first bit error rate is greater than the second bit error rate, performing the foregoing steps repeatedly until the first bit error rate is not greater than the second bit error rate, and using a carrier power that corresponds to each subcarrier of the at least two subcarriers when the first bit error rate is not greater than the second bit error rate as a carrier power of the corresponding subcarrier.

5. The method according to claim 1, wherein after the determining (S104) a modulation format in which a to-be-modulated signal is modulated onto each subcarrier of the at least two subcarriers and the determining (S106) a carrier power of each subcarrier of the at least two subcarriers, the method further comprises:

generating (S107) and sending (S108) a notification message comprising the modulation format and the carrier power.

6. A modulation format and carrier power adjusting method, applied to a multi-carrier communications system and comprising:

receiving (S401) a notification message, wherein the notification message comprises a modulation format in which a to-be-modulated signal is modulated onto each subcarrier of at least two subcarriers, and a carrier power of each subcarrier of the at least two subcarriers;

adjusting (S402), according to the modulation format, a modulation format in which the to-be-modulated signal is modulated onto each subcarrier of the at least two subcarriers; and

adjusting (S403) a carrier power of each subcarrier of the at least two subcarriers according to the carrier power, wherein

the modulation format, comprised in the notification message, in which a to-be-modulated signal is modulated onto each subcarrier of the at least two subcarriers is determined according to a subcarrier bit error rate of each subcarrier of the at least two subcarriers, and the subcarrier bit error rate is determined according to a per-unit-power signal-to-noise ratio of the corresponding subcarrier and a preset correspondence between signal-to-noise ratios and bit error rates determined according to a diagram of signal-to-noise ratio and bit error rate distribution curves; and

the carrier power, comprised in the notification message, of each subcarrier of the at least two subcarriers is determined according to a system bit error rate of the multi-carrier communications system, and the system bit error rate is determined according to the subcarrier bit error rate of each subcarrier of the at least two subcarriers.

7. A modulation format and carrier power determining apparatus (900), applied to a multi-carrier communications system and comprising a receiving unit (901), a first determining unit (902), a second determining unit (903), and a third determining unit (904), wherein

the receiving unit (901) is configured to receive a modulated signal, wherein the modulated signal is a signal modulated onto at least two subcarriers of a carrier for transmission;

the first determining unit (902) is configured to determine a per-unit-power signal-to-noise ratio of each subcarrier of the at least two subcarriers by using the modulated signal received by the receiving unit (901);

the second determining unit (903) is configured to: determine a bit error rate of each subcarrier of the at least two subcarriers, according to the per-unit-power signal-to-noise ratio that is of each subcarrier of the at least two subcarriers and determined by the first determining unit (901), and according to a preset correspondence between signal-to-noise ratios and bit error rates determined according to a diagram of signal-to-noise ratio and bit error rate distribution curves, to obtain subcarrier bit error rates; and determine a system bit error rate of the multi-carrier communications system according to the subcarrier bit error rates; and

the third determining unit (904) is configured to: determine, according to the subcarrier bit error rates determined by the second determining unit (903), a modulation format in which a to-be-modulated signal is modulated onto each subcarrier of the at least two subcarriers; and determine a carrier power of each subcarrier of the at least two subcarriers according to the system bit error rate determined by the second determining unit (903).

**8.** The determining apparatus (900) according to claim 7, wherein the third determining unit (904) is specifically configured to determine, in a following manner according to the subcarrier bit error rates, the modulation format in which a to-be-modulated signal is modulated onto each subcarrier of the at least two subcarriers:

increasing a modulation order of a subcarrier with a lowest subcarrier bit error rate by 1; determining a bit error rate of the subcarrier whose modulation order is increased by 1, according to a modulation format of the subcarrier whose modulation order is increased by 1, a signal-to-noise ratio of the subcarrier whose modulation order is increased by 1, and the preset correspondence between signal-to-noise ratios and bit error rates; determining a quantity of bits currently allocated to each subcarrier of the at least two subcarriers; determining a total quantity of bits according to the quantity of bits allocated to each subcarrier of the at least two subcarriers, wherein the total quantity of bits is a sum of the quantities of bits allocated to the at least two subcarriers; comparing the total quantity of bits with a specified target quantity of bits; and if the total quantity of bits is less than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier; or decreasing a modulation order of a subcarrier with a highest subcarrier bit error rate by 1; determining a bit error rate of the subcarrier whose modulation order is decreased by 1, according to a modulation format of the subcarrier whose modulation order is increased by 1, a signal-to-noise ratio of the subcarrier whose modulation order is increased by 1, and the preset correspondence between signal-to-noise ratios and bit error rates; determining a quantity of bits allocated to each subcarrier of the at least two subcarriers within a unit time; determining a total quantity of bits according to the quantity of bits allocated to each subcarrier of the at least two subcarriers, wherein the total quantity of bits is a sum of the quantities of bits allocated to the at least two subcarriers; comparing the total quantity of bits with a specified target quantity of bits; and if the total quantity of bits is greater than the target quantity of bits, performing the foregoing steps repeatedly until the total quantity of bits is equal to the target quantity of bits, and using a modulation format that corresponds to each subcarrier of the at least two subcarriers when the total quantity of bits is equal to the target quantity of bits as the modulation format in which the to-be-modulated signal is modulated onto the corresponding subcarrier.

**9.** The determining apparatus (900) according to claim 7 or 8, wherein the third determining unit (904) is specifically configured to determine the carrier power of each subcarrier of the at least two subcarriers according to the system bit error rate in the following manner:

allocating an initial power to each subcarrier of the at least two subcarriers, and performing normalization processing for a first time on a total power of the respective carrier powers of the at least two subcarriers after initial power allocation, wherein subcarriers after initial power allocation that have a same modulation format have a same signal-to-noise ratio, and a sum of carrier powers, after normalization processing is performed on the total power of the respective carrier powers of the at least two subcarriers after initial power allocation, is equal to a specified target power; determining a subcarrier bit error rate of each subcarrier of the at least two subcarriers, according to a signal-to-noise ratio of each subcarrier of the at least two subcarriers after normalization processing is performed for the first time and according to the preset correspondence between signal-to-noise ratios and bit error rates; determining, according to the subcarrier bit error rate of each subcarrier of the at least two subcarriers, a system bit error rate that is after normalization processing is performed for the first time, and using the system bit error rate that is after normalization processing is performed for the first time as a first bit error rate; increasing a modulation order of a subcarrier that requires a lowest power when the normalization processing is performed by 1, and decreasing a modulation order of a subcarrier that requires a highest power when the normalization processing is performed by 1, and then reallocating a power to each subcarrier of the at least two subcarriers; performing normalization processing for a second time on a total power of the respective carrier powers of the at least two subcarriers after power re-allocation; determining a subcarrier bit error rate of each subcarrier of the at least two subcarriers, according to a signal-to-noise ratio of each subcarrier of the at least two subcarriers after normalization processing is performed for the second time and according to the preset correspondence between signal-to-noise ratios and bit error rates;

determining, according to the subcarrier bit error rate of each subcarrier of the at least two subcarriers, a system bit error rate that is after normalization processing is performed for the second time, and using the system bit error rate that is after normalization processing is performed for the second time as a second bit error rate;

comparing magnitudes of the first bit error rate and the second bit error rate; and

if the first bit error rate is greater than the second bit error rate, performing the foregoing steps repeatedly until the first bit error rate is not greater than the second bit error rate, and using a carrier power that corresponds to each subcarrier of the at least two subcarriers when the first bit error rate is not greater than the second bit error rate as a carrier power of the corresponding subcarrier.

10. The determining apparatus (900) according to claim 7, wherein the determining apparatus further comprises a generation unit (905) and a sending unit (906), wherein

the generation unit (905) is configured to: after the third determining unit determines the modulation format in which a to-be-modulated signal is modulated onto each subcarrier of the at least two subcarriers, and determines the carrier power of each subcarrier of the at least two subcarriers, generate a notification message comprising the modulation format and the carrier power; and

the sending unit (906) is configured to send the notification message generated by the generation unit (905).

11. A receiver (1100), comprising a demodulator (1101), a driver (1102), a decoder (1103), and the modulation format and carrier power determining apparatus (1104) according to any one of claims 7 to 10, wherein

the demodulator (1101) is configured to receive a multi-carrier signal and perform demodulation to obtain a modulated signal;

the driver (1102) is configured to transfer the modulated signal obtained by means of demodulation by the demodulator (1101) to the modulation format and carrier power determining apparatus (1104);

the modulation format and carrier power determining apparatus (1104) is configured to: receive the modulated signal transferred by the driver (1102); process the modulated signal; determine a modulation format in which a to-be-modulated signal is modulated onto each subcarrier of at least two subcarriers and a carrier power of each subcarrier of the at least two subcarriers; and generate and send a notification message comprising the modulation format and the carrier power; and

the decoder (1103) is configured to decode the modulated signal processed by the modulation format and carrier power determining apparatus (1104) and output a decoded signal.

12. A modulation format and carrier power adjusting apparatus (1200), comprising a receiving unit (1201) and an adjustment unit (1202), wherein

the receiving unit (1201) is configured to receive a notification message, wherein the notification message comprises a modulation format in which a to-be-modulated signal is modulated onto each subcarrier of at least two subcarriers, and a carrier power of each subcarrier of the at least two subcarriers; and

the adjustment unit (1202) is configured to: adjust, according to the modulation format comprised in the notification message received by the receiving unit (1201), a modulation format in which the to-be-modulated signal is modulated onto each subcarrier of the at least two subcarriers; and adjust a carrier power of each subcarrier of the at least two subcarriers according to the carrier power comprised in the notification message received by the receiving unit (1201), wherein

the modulation format, comprised in the notification message, in which a to-be-modulated signal is modulated onto each subcarrier of the at least two subcarriers is determined according to a subcarrier bit error rate of each subcarrier of the at least two subcarriers, and the subcarrier bit error rate is determined according to a per-unit-power signal-to-noise ratio of the corresponding subcarrier and a preset correspondence between signal-to-noise ratios and bit error rates determined according to a diagram of signal-to-noise ratio and bit error rate distribution curves; and

the carrier power, comprised in the notification message, of each subcarrier of the at least two subcarriers is determined according to a system bit error rate of the multi-carrier communications system, and the system bit error rate is determined according to the subcarrier bit error rate of each subcarrier of the at least two subcarriers.

13. A transmitter (1400), comprising an encoder (1401), a driver (1402), a modulator (1403), and the modulation format and carrier power adjusting apparatus (1404) according to claim 12, wherein

the encoder (1401) is configured to receive a bit stream, and encode the received bit stream;

the modulation format and carrier power adjusting apparatus (1404) is configured to: receive a bit stream obtained by means of encoding by the encoder (1401); perform data processing on the encoded bit stream to form at least two subcarriers; and adjust, according to a received notification message, a modulation format in which a to-be-modulated signal is modulated onto each subcarrier of the at least two subcarriers and a carrier power of each subcarrier of the at least two subcarriers, wherein the notification message comprises a modulation format in which the to-be-modulated signal is modulated onto each subcarrier of the at least two subcarriers and a carrier power of each subcarrier of the at least two subcarriers;

the driver (1402) is configured to transfer the multiple carriers formed by means of processing by the modulation format and carrier power adjusting apparatus (1404) and modulation format and carrier power adjustment values to the modulator (1404); and

the modulator (1403) is configured to modulate the to-be-modulated signal onto the multiple carriers.

14. A multi-carrier communications system (1500), comprising a receiver (1100) and a transmitter (1400), wherein

the receiver (1100) is configured to: determine a per-unit-power signal-to-noise ratio of each subcarrier of at least two subcarriers by using a modulated signal; determine a bit error rate of each subcarrier of the at least two subcarriers according to the signal-to-noise ratio and a preset correspondence between signal-to-noise ratios and bit error rates determined according to a diagram of signal-to-noise ratio and bit error rate distribution curves, to obtain subcarrier bit error rates; determine, according to the subcarrier bit error rates, a modulation format in which a to-be-modulated signal is modulated onto each subcarrier of the at least two subcarriers; determine a system bit error rate of the multi-carrier communications system according to the subcarrier bit error rates; determine a carrier power of each subcarrier of the at least two subcarriers according to the system bit error rate; generate a notification message comprising the modulation format and the carrier power; and feed back the notification message to the transmitter; and

the transmitter (1400) receives the notification message; adjusts, according to the modulation format comprised in the notification message, a modulation format in which the to-be-modulated signal is modulated onto each subcarrier of the at least two subcarriers; and adjusts a carrier power of each subcarrier of the at least two subcarriers according to the carrier power comprised in the notification message.

**Patentansprüche**

1. Verfahren zur Bestimmung des Modulationsformats und der Trägerleistung, angewendet auf ein Multicarrier-Kommunikationssystem und umfassend:

Empfang (S101) eines modulierten Signals, wobei das modulierte Signal ein Signal ist, das auf wenigstens zwei Zwischenträger eines Trägers für die Übertragung moduliert wird;
Bestimmung (S102) eines Rauschabstands der Leistung pro Einheit für jeden Zwischenträger der wenigstens zwei Zwischenträger unter Verwendung des modulierten Signals;
Bestimmung (S103) einer Bitfehlerrate für jeden Zwischenträger der wenigstens zwei Zwischenträger dem Rauschabstand und einer vorgegebenen Entsprechung zwischen den Rauschabständen und Bitfehlerraten, die einem Diagramm der Verteilungskurven für den Rauschabstand und die Bitfehlerrate entsprechend bestimmt wird, entsprechend, um die Bitfehlerraten des Zwischenträgers zu erhalten;
Bestimmung (S104) eines Modulationsformats den Zwischenträger-Bitfehlerraten entsprechend, in dem ein zu modulierendes Signal auf jeden Zwischenträger der wenigstens zwei Zwischenträger moduliert wird; und
Bestimmung (S105) einer Systembitfehlerrate des Multicarrier-Kommunikationssystems den Zwischenträger-Bitfehlerraten entsprechend, und Bestimmung (S106) einer Trägerleistung für jeden Zwischenträger der wenigstens zwei Zwischenträger der Systembitfehlerrate entsprechend.

2. Verfahren nach Anspruch 1, wobei die Bestimmung (S104) eines Modulationsformats, in dem ein zu modulierendes Signal auf jeden Zwischenträger der wenigstens zwei Zwischenträger moduliert wird, den Zwischenträger-Bitfehlerraten entsprechend umfasst:

Erhöhung (S2051) einer Modulationsordnung eines Zwischenträgers mit einer niedrigsten Bitfehlerrate um 1;
Bestimmung (S2052) einer Bitfehlerrate des Zwischenträgers, dessen Modulationsordnung um 1 erhöht wird, einem Modulationsformat des Zwischenträgers, dessen Modulationsordnung um 1 erhöht wird, einem Rauschabstand des Zwischenträgers, dessen Modulationsordnung um 1 erhöht wird und der voreingestellten Entsprechung zwischen den Rauschabständen und Bitfehlerraten entsprechend;
Bestimmung (S201) einer Bitanzahl, die jedem Zwischenträger der wenigstens zwei Zwischenträger innerhalb einer Einheitenzeit zugeordnet ist;
Bestimmung (S202) einer Gesamtbitanzahl der Bitanzahl entsprechend, die jedem Zwischenträger der wenigstens zwei Zwischenträger zugeordnet ist, wobei die Gesamtanzahl der Bits die Summe der Bitanzahlen ist, die den wenigstens zwei Zwischenträgern zugeordnet sind; Vergleich (S203) der Gesamtbitanzahl mit einer vorgegebenen Zielbitanzahl; und wenn die Gesamtbitanzahl geringer ist als die Zielbitanzahl, wiederholte Ausführung der vorhergehenden Schritte, bis die Gesamtbitanzahl der Zielbitanzahl entspricht, und Verwendung eines Modulationsformats, das jedem Zwischenträger der wenigstens zwei Zwischenträger entspricht, wenn die Gesamtbitanzahl der Zielbitanzahl entspricht, als das Modulationsformat, in dem das zu modulierende Signal auf den jeweiligen Zielträger moduliert wird.

3.  Verfahren nach Anspruch 1, wobei die Bestimmung (S104) eines Modulationsformats, in dem ein zu modulierendes Signal auf jeden Zwischenträger der wenigstens zwei Zwischenträger moduliert wird, den Zwischenträger-Bitfehlerraten entsprechend umfasst:

    Verringerung (S2041) einer Modulationsordnung eines Zwischenträgers mit einer höchsten Zwischenträger-Bitfehlerrate um 1; Bestimmung (S2042) einer Bitfehlerrate des Zwischenträgers, dessen Modulationsordnung um 1 verringert wird, einem Modulationsformat des Zwischenträgers, dessen Modulationsordnung um 1 erhöht wird, einem Rauschabstand des Zwischenträgers, dessen Modulationsordnung um 1 erhöht wird und der voreingestellten Entsprechung zwischen den Rauschabständen und Bitfehlerraten entsprechend; Bestimmung (S201) einer Bitanzahl, die jedem Zwischenträger der wenigstens zwei Zwischenträger innerhalb einer Einheitenzeit zugeordnet ist; Bestimmung (S202) einer Gesamtbitanzahl der Bitanzahl entsprechend, die jedem Zwischenträger der wenigstens zwei Zwischenträger zugeordnet ist, wobei die Gesamtanzahl der Bits die Summe der Bitanzahlen ist, die den wenigstens zwei Zwischenträgern zugeordnet sind; Vergleich (S203) der Gesamtbitanzahl mit einer vorgegebenen Zielbitanzahl; und wenn die Gesamtbitanzahl größer ist als die Zielbitanzahl, wiederholte Ausführung der vorhergehenden Schritte, bis die Gesamtbitanzahl der Zielbitanzahl entspricht, und Verwendung eines Modulationsformats, das jedem Zwischenträger der wenigstens zwei Zwischenträger entspricht, wenn die Gesamtbitanzahl der Zielbitanzahl entspricht, als das Modulationsformat, in dem das zu modulierende Signal auf den jeweiligen Zielträger moduliert wird.

4.  Verfahren nach einem der Ansprüche 1 bis 3, wobei die Bestimmung (S106) einer Trägerleistung für jeden Zwischenträger der wenigstens zwei Zwischenträger der Systembitfehlerrate entsprechend umfasst:

    Zuordnung (S301) einer anfänglichen Leistung zu jedem Zwischenträger der wenigstens zwei Zwischenträger und Durchführung der Normalisierung für eine erste Zeit für eine Gesamtleistung der jeweiligen Trägerleistungen der wenigstens zwei Zwischenträger nach der anfänglichen Leistungszuordnung, wobei Zwischenträger, die nach der anfänglichen Leistungszuordnung ein selbes Modulationsformat aufweisen, einen selben Rauschabstand aufweisen und eine Summe von Trägerleistungen nach Durchführung der Normalisierung für die Gesamtleistung der jeweiligen Trägerleistungen der wenigstens zwei Zwischenträger nach der anfänglichen Leistungszuordnung einer vorgegebenen Zielleistung entspricht; Bestimmung (S302) einer Zwischenträger-Bitfehlerrate für jeden Zwischenträger der wenigstens zwei Zwischenträger einem Rauschabstand für jeden Zwischenträger der wenigstens zwei Zwischenträger nach der Durchführung der Normalisierung für die erste Zeit und nach der voreingestellten Entsprechung zwischen den Rauschabständen und Bitfehlerraten entsprechend; Bestimmung (S303) einer Systembitfehlerrate, die nach der Durchführung der Normalisierung für die erste Zeit vorliegt, der Zwischenträger-Bitfehlerrate für jeden Zwischenträger der wenigstens zwei Zwischenträger entsprechend und Verwendung der System-Bitfehlerrate, die nach der Durchführung der Normalisierung für eine erste Zeit vorliegt, als eine erste Bitfehlerrate; Erhöhung (S304) einer Modulationsordnung eines Zwischenträgers, der eine geringste Leistung benötigt, bei Durchführung der Normalisierung für die erste Zeit um 1, und Verringerung einer Modulationsordnung eines Zwischenträgers, der eine höchste Leistung benötigt, bei Durchführung der Normalisierung für die erste Zeit um 1, und dann erneute Zuordnung einer Leistung zu jedem Zwischenträger der wenigstens zwei Zwischenträger; Durchführung (S305) der Normalisierung für eine zweite Zeit für eine Gesamtleistung der jeweiligen Trägerleistungen der wenigstens zwei Zwischenträger nach der Neuzuordnung der Leistung; Bestimmung (S306) einer Zwischenträger-Bitfehlerrate für jeden Zwischenträger der wenigstens zwei Zwischenträger einem Rauschabstand für jeden Zwischenträger der wenigstens zwei Zwischenträger nach Durchführung der Normalisierung für die zweite Zeit entsprechend und der voreingestellten Entsprechung zwischen den Rauschabständen und Bitfehlerraten entsprechend;

Bestimmung (S307) einer Systembitfehlerrate, die nach Durchführung der Normalisierung für eine zweite Zeit vorliegt, der Zwischenträger-Bitfehlerrate für jeden Zwischenträger der wenigstens zwei Zwischenträger entsprechend, und Verwendung der System-Bitfehlerrate, die nach Durchführung der Normalisierung für eine zweite Zeit vorliegt, als eine zweite Bitfehlerrate;

Vergleich (S308) von Größen der ersten Bitfehlerrate und der zweiten Bitfehlerrate; und wenn die erste Bitfehlerrate größer ist als die zweite Bitfehlerrate, wiederholte Ausführung der vorhergehenden Schritte, bis die erste Bitfehlerrate nicht größer ist als die zweite Bitfehlerrate, und Verwendung einer Trägerleistung, die jedem Zwischenträger der wenigstens zwei Zwischenträger entspricht, als eine Trägerleistung für den jeweiligen Zwischenträger, wenn die erste Bitfehlerrate nicht größer ist als die zweite Bitfehlerrate.

5. Verfahren nach Anspruch 1, wobei nach der Bestimmung (S104) eines Modulationsformats, in dem ein zu modulierendes Signal auf jeden Zwischenträger der wenigstens zwei Zwischenträger moduliert wird, und Bestimmung (S106) einer Trägerleistung für jeden Zwischenträger der wenigstens zwei Zwischenträger das Verfahren ferner umfasst:

Erzeugung (S107) und Senden (S108) einer Benachrichtigungsmitteilung, die das Modulationsformat und die Trägerleistung umfasst.

6. Verfahren zum Einstellen des Modulationsformats und der Trägerleistung, angewendet auf ein Multicarrier-Kommunikationssystem und umfassend:

Empfang (S401) einer Benachrichtigungsmitteilung, wobei die Benachrichtigungsmitteilung ein Modulationsformat, in dem ein zu modulierendes Signal auf jeden Zwischenträger von wenigstens zwei Zwischenträgern moduliert wird, und eine Trägerleistung für jeden Zwischenträger der wenigstens zwei Zwischenträger umfasst;

Einstellung (S402) eines Modulationsformats, in dem das zu modulierende Signal auf jeden Zwischenträger der wenigstens zwei Zwischenträger moduliert wird, dem Modulationsformat entsprechend; und

Einstellung (S403) einer Trägerleistung für jeden Zwischenträger der wenigstens zwei Zwischenträger der Trägerleistung entsprechend, wobei das Modulationsformat, das in der Benachrichtigungsmitteilung enthalten ist, in dem ein zu modulierendes Signal auf jeden Zwischenträger der wenigstens zwei Zwischenträger moduliert wird, einer Zwischenträger-Bitfehlerrate für jeden Zwischenträger der wenigstens zwei Zwischenträger entsprechend bestimmt wird, und die Zwischenträger-Bitfehlerrate einem Rauschabstand der Leistung pro Einheit für den jeweiligen Zwischenträger und einer vorgegebenen Entsprechung zwischen den Rauschabständen und Bitfehlerraten, die nach einem Diagramm der Verteilungskurven für den Rauschabstand und die Bitfehlerraten bestimmt werden, entsprechend bestimmt wird; und

die Trägerleistung, die in der Benachrichtigungsmitteilung enthalten ist, für jeden Zwischenträger der wenigstens zwei Zwischenträger einer Systembitfehlerrate des Multicarrier-Kommunikationssystems entsprechend bestimmt wird, und die System-Bitfehlerrate der Zwischenträger-Bitfehlerrate für jeden Zwischenträger der wenigstens zwei Zwischenträger entsprechend bestimmt wird.

7. Vorrichtung zur Bestimmung des Modulationsformats und der Trägerleistung (900), angewendet auf ein Multicarrier-Kommunikationssystem und umfassend eine Empfangseinheit (901), eine erste Bestimmungseinheit (902), eine zweite Bestimmungseinheit (903) und eine dritte Bestimmungseinheit (904), wobei die Empfangseinheit (901) konfiguriert ist, um ein moduliertes Signal zu empfangen, wobei das modulierte Signal ein Signal ist, das zur Übertragung auf wenigstens zwei Zwischenträger eines Trägers moduliert ist;

die erste Bestimmungseinheit (902) konfiguriert ist, um einen Rauschabstand der Leistung pro Einheit für jeden Zwischenträger der wenigstens zwei Zwischenträger unter Verwendung des modulierten Signals, das durch die Empfangseinheit (901) empfangen wurde, zu bestimmen;

die zweite Bestimmungseinheit (903) konfiguriert ist, um: eine Bitfehlerrate für jeden Zwischenträger der wenigstens zwei Zwischenträger dem Rauschabstand der Leistung pro Einheit für jeden Zwischenträger der wenigstens zwei Zwischenträger entsprechend, die durch die erste Bestimmungseinheit (901) bestimmt wird, und einer vorgegebenen Entsprechung zwischen den Rauschabständen und Bitfehlerraten, die nach einem Diagramm der Verteilungskurven für den Rauschabstand und die Bitfehlerraten bestimmt wird, um die Bitfehlerraten des Zwischenträgers zu erhalten, entsprechend zu bestimmen; und eine Systembitfehlerrate des Multicarrier-Kommunikationssystems den Zwischenträger-Bitfehlerraten entsprechend zu bestimmen; und die dritte Bestimmungseinheit (904) konfiguriert ist, um: den Zwischenträger-Bitfehlerraten, die durch die zweite Bestimmungseinheit (903) bestimmt wurden, entsprechend ein Modulationsformat, in dem ein zu modulierendes Signal auf jeden Zwischenträger der wenigstens zwei Zwischenträger moduliert wird, zu bestimmen; und eine Trägerleistung für jeden Zwischenträger der wenigstens zwei Zwischenträger der Systembitfehlerrate entsprechend zu bestimmen, die durch die zweite Bestimmungseinheit bestimmt wurde (903).

8. Bestimmungsvorrichtung (900) nach Anspruch 7, wobei die dritte Bestimmungseinheit (904) spezifisch konfiguriert ist, um in einer folgenden Weise den Zwischenträger-Bitfehlerraten entsprechend das Modulationsformat, in dem ein zu modulierendes Signal auf jeden Zwischenträger der wenigstens zwei Zwischenträger moduliert wird, zu bestimmen:

Erhöhung einer Modulationsordnung eines Zwischenträgers mit einer niedrigsten Bitfehlerrate um 1;
Bestimmung einer Bitfehlerrate des Zwischenträgers, dessen Modulationsordnung um 1 erhöht wird, einem Modulationsformat des Zwischenträgers, dessen Modulationsordnung um 1 erhöht wird, einem Rauschabstand des Zwischenträgers, dessen Modulationsordnung um 1 erhöht wird, und der voreingestellten Entsprechung zwischen den Rauschabständen und Bitfehlerraten entsprechend;
Bestimmung einer Bitanzahl, die aktuell jedem Zwischenträger der wenigstens zwei Zwischenträger zugeordnet ist;
Bestimmung einer Gesamtbitanzahl der Bitanzahl entsprechend, die jedem Zwischenträger der wenigstens zwei Zwischenträger zugeordnet ist, wobei die Gesamtanzahl der Bits die Summe der Bitanzahlen ist, die den wenigstens zwei Zwischenträgern zugeordnet sind;
Vergleich der Gesamtbitanzahl mit einer vorgegebenen Zielbitanzahl; und
wenn die Gesamtbitanzahl geringer ist als die Zielbitanzahl, wiederholte Ausführung der vorhergehenden Schritte, bis die Gesamtbitanzahl der Zielbitanzahl entspricht, und Verwendung eines Modulationsformats, das jedem Zwischenträger der wenigstens zwei Zwischenträger entspricht, wenn die Gesamtbitanzahl der Zielbitanzahl entspricht, als das Modulationsformat, in dem das zu modulierende Signal auf den jeweiligen Zielträger moduliert wird; oder
Verringerung einer Modulationsordnung eines Zwischenträgers mit einer höchsten Zwischenträger-Bitfehlerrate um 1;
Bestimmung einer Bitfehlerrate des Zwischenträgers, dessen Modulationsordnung um 1 verringert wird, einem Modulationsformat des Zwischenträgers, dessen Modulationsordnung um 1 erhöht wird, einem Rauschabstand des Zwischenträgers, dessen Modulationsordnung um 1 erhöht wird, und der voreingestellten Entsprechung zwischen den Rauschabständen und Bitfehlerraten entsprechend;
Bestimmung einer Bitanzahl, die jedem Zwischenträger der wenigstens zwei Zwischenträger innerhalb einer Einheitenzeit zugeordnet ist;
Bestimmung einer Gesamtbitanzahl der Bitanzahl entsprechend, die jedem Zwischenträger der wenigstens zwei Zwischenträger zugeordnet ist, wobei die Gesamtanzahl der Bits die Summe der Bitanzahlen ist, die den wenigstens zwei Zwischenträgern zugeordnet sind;
Vergleich der Gesamtbitanzahl mit einer vorgegebenen Zielbitanzahl; und
wenn die Gesamtbitanzahl größer ist als die Zielbitanzahl, wiederholte Ausführung der vorhergehenden Schritte, bis die Gesamtbitanzahl der Zielbitanzahl entspricht, und Verwendung eines Modulationsformats, das jedem Zwischenträger der wenigstens zwei Zwischenträger entspricht, wenn die Gesamtbitanzahl der Zielbitanzahl entspricht, als das Modulationsformat, in dem das zu modulierende Signal auf den jeweiligen Zielträger moduliert wird.

9. Bestimmungsvorrichtung (900) nach Anspruch 7 oder 8, wobei die dritte Bestimmungseinheit (904) spezifisch konfiguriert ist, um die Trägerleistung für jeden Zwischenträger der wenigstens zwei Zwischenträger der Systembitfehlerrate entsprechend in der folgenden Weise zu bestimmen:

Zuordnung einer anfänglichen Leistung zu jedem Zwischenträger der wenigstens zwei Zwischenträger und Durchführung der Normalisierung für eine erste Zeit für eine Gesamtleistung der jeweiligen Trägerleistungen der wenigstens zwei Zwischenträger nach der anfänglichen Leistungszuordnung, wobei nach der anfänglichen Leistungszuordnung Zwischenträger, die ein selbes Modulationsformat aufweisen, einen selben Rauschabstand aufweisen, und eine Summe von Trägerleistungen nach Durchführung der Normalisierung für die Gesamtleistung der jeweiligen Trägerleistungen der wenigstens zwei Zwischenträger nach der anfänglichen Leistungszuordnung einer vorgegebenen Zielleistung entspricht;
Bestimmung einer Zwischenträger-Bitfehlerrate für jeden Zwischenträger der wenigstens zwei Zwischenträger einem Rauschabstand für jeden Zwischenträger der wenigstens zwei Zwischenträger nach der ersten Durchführung der Normalisierung und der voreingestellten Entsprechung zwischen den Rauschabständen und Bitfehlerraten entsprechend;

Bestimmung einer Systembitfehlerrate, die nach der ersten Durchführung der Normalisierung vorliegt, der Zwischenträger-Bitfehlerrate für jeden Zwischenträger der wenigstens zwei Zwischenträger entsprechend und Verwendung der System-Bitfehlerrate, die nach der ersten Durchführung der Normalisierung vorliegt, als eine erste Bitfehlerrate;

Erhöhung einer Modulationsordnung eines Zwischenträgers, die die geringste Leistung bei der Durchführung der Normalisierung verlangt, um 1, und Verringerung einer Modulationsordnung eines Zwischenträgers, der eine höchste Leistung bei der Durchführung der Normalisierung verlangt, um 1, und dann erneute Zuordnung einer Leistung zu jedem Zwischenträger der wenigstens zwei Zwischenträger;

Durchführung der Normalisierung für eine zweite Zeit für eine Gesamtleistung der jeweiligen Trägerleistungen der wenigstens zwei Zwischenträger nach Neuzuordnung der Leistung;

Bestimmung einer Zwischenträger-Bitfehlerrate für jeden Zwischenträger der wenigstens zwei Zwischenträger einem Rauschabstand für jeden Zwischenträger der wenigstens zwei Zwischenträger nach Durchführung der Normalisierung für eine zweite Zeit und der voreingestellten Entsprechung zwischen den Rauschabständen und Bitfehlerraten entsprechend;

Bestimmung einer Systembitfehlerrate der Zwischenträger-Bitfehlerrate für jeden Zwischenträger der wenigstens zwei Zwischenträger entsprechend nach Durchführung der Normalisierung für eine zweite Zeit und Verwendung der System-Bitfehlerrate, die nach Durchführung der Normalisierung für eine zweite Zeit vorliegt, als eine zweite Bitfehlerrate;

Vergleich der Größen der ersten Bitfehlerrate und der zweiten Bitfehlerrate; und

wenn die erste Bitfehlerrate größer ist als die zweite Bitfehlerrate, wiederholte Ausführung der vorhergehenden Schritte, bis die erste Bitfehlerrate nicht größer ist als die zweite Bitfehlerrate, und

Verwendung einer Trägerleistung, die jedem Zwischenträger der wenigstens zwei Zwischenträger entspricht, wenn die erste Bitfehlerrate nicht größer ist als die zweite Bitfehlerrate, als eine Trägerleistung für den jeweiligen Zwischenträger.

10. Bestimmungsvorrichtung (900) nach Anspruch 7, wobei die Bestimmungsvorrichtung ferner eine Erzeugungseinheit (905) und eine Sendeeinheit (906) umfasst, wobei

die Erzeugungseinheit (905) konfiguriert ist, um: nachdem die dritte Bestimmungseinheit das Modulationsformat, in dem ein zu modulierendes Signal auf jeden Zwischenträger der wenigstens zwei Zwischenträger moduliert wird, und die Trägerleistung für jeden Zwischenträger der wenigstens zwei Zwischenträger bestimmt, eine Benachrichtigungsmitteilung zu erzeugen, die das Modulationsformat und die Trägerleistung umfasst; und

die Sendeeinheit (906) konfiguriert ist, um die Benachrichtigungsmitteilung, die durch die Erzeugungseinheit (905) erzeugt wird, zu versenden.

11. Empfänger (1100), umfassend einen Demodulator (1101), einen Treiber (1102), einen Decoder (1103) und die Bestimmungsvorrichtung für das Modulationsformat und die Trägerleistung (1104) nach einem der Ansprüche 7 bis 10, wobei der Demodulator (1101) konfiguriert ist, um ein Multicarrier-Signal zu empfangen und die Demodulation durchzuführen, um ein moduliertes Signal zu erhalten;

der Treiber (1102) konfiguriert ist, um das modulierte Signal, das durch Demodulation durch den Demodulator (1101) erhalten wurde, an die Bestimmungsvorrichtung für das Modulationsformat und die Trägerleistung (1104) zu übertragen;

die Bestimmungsvorrichtung für das Modulationsformat und die Trägerleistung (1104) konfiguriert ist, um: das modulierte Signal zu empfangen, das durch den Treiber (1102) übertragen wird; das modulierte Signal zu verarbeiten;

ein Modulationsformat, in dem ein zu modulierendes Signal auf jeden Zwischenträger von wenigstens zwei Zwischenträgern moduliert wird, und eine Trägerleistung für jeden Zwischenträger der wenigstens zwei Zwischenträger zu bestimmen; und eine Benachrichtigungsmitteilung, die das Modulationsformat und die Trägerleistung umfasst, zu erzeugen und zu versenden; und

der Decoder (1103) konfiguriert ist, um das modulierte Signal, das durch die Bestimmungsvorrichtung für das Modulationsformat und die Trägerleistung (1104) verarbeitet wird, zu decodieren und ein decodiertes Signal auszugeben.

12. Einstellvorrichtung für das Modulationsformat und die Trägerleistung (1200), umfassend eine Empfangseinheit (1201) und eine Einstelleinheit (1202), wobei

die Empfangseinheit (1201) konfiguriert ist, um eine Benachrichtigungsmitteilung zu empfangen, wobei die Benachrichtigungsmitteilung ein Modulationsformat, in dem ein zu modulierendes Signal auf jeden Zwischenträger von wenigstens zwei Zwischenträgern moduliert wird, und eine Trägerleistung für jeden Zwischenträger der wenigstens zwei Zwischenträger umfasst; und

die Einstelleinheit (1202) konfiguriert ist, um: dem Modulationsformat, das in der Benachrichtigungsmitteilung enthalten ist, die durch die Empfangseinheit (1201) empfangen wird, entsprechend ein Modulationsformat einzustellen, in dem das zu modulierende Signal auf jeden Zwischenträger der wenigstens zwei Zwischenträger moduliert wird; und eine Trägerleistung für jeden Zwischenträger der wenigstens zwei Zwischenträger der Trägerleistung entsprechend einzustellen, die in der Benachrichtigungsmitteilung enthalten ist, die durch die Empfangseinheit (1201) empfangen wird, wobei

das Modulationsformat, das in der Benachrichtigungsmitteilung enthalten ist, in dem ein zu modulierendes Signal auf jeden Zwischenträger der wenigstens zwei Zwischenträger moduliert wird, einer Zwischenträger-Bitfehlerrate für jeden Zwischenträger der wenigstens zwei Zwischenträger entsprechend bestimmt wird, und die Zwischenträger-Bitfehlerrate einem Rauschabstand der Leistung pro Einheit für den jeweiligen Zwischenträger und einer vorgegebenen Entsprechung zwischen den Rauschabständen und Bitfehlerraten, die nach einem Diagramm der Verteilungskurven für den Rauschabstand und die Bitfehlerraten bestimmt werden, entsprechend bestimmt wird; und

die Trägerleistung, die in der Benachrichtigungsmitteilung enthalten ist, für jeden Zwischenträger der wenigstens zwei Zwischenträger einer Systembitfehlerrate des Multicarrier-Kommunikationssystems entsprechend bestimmt wird, und die System-Bitfehlerrate der Zwischenträger-Bitfehlerrate für jeden Zwischenträger der wenigstens zwei Zwischenträger entsprechend bestimmt wird.

13. Sender (1400), umfassend einen Encoder (1401), einen Treiber (1402), einen Modulator (1403) und die Einstellvorrichtung für das Modulationsformat und die Trägerleistung (1404) nach Anspruch 12, wobei

der Encoder (1401) konfiguriert ist, um einen Bitstream zu empfangen und den empfangenen Bitstream zu codieren;

die Einstellvorrichtung für das Modulationsformat und die Trägerleistung (1404) konfiguriert ist, um: einen Bitstream zu empfangen, der durch Codierung durch den Encoder erhalten wurde (1401); Datenverarbeitung am codierten Bitstream auszuführen, um wenigstens zwei Zwischenträger zu bilden; und einer erhaltenen Benachrichtigungsmitteilung entsprechend ein Modulationsformat, in dem ein zu modulierendes Signal auf jeden Zwischenträger der wenigstens zwei Zwischenträger moduliert wird, und eine Trägerleistung für jeden Zwischenträger der wenigstens zwei Zwischenträger einzustellen, wobei die Benachrichtigungsmitteilung ein Modulationsformat, in dem das zu modulierende Signal auf jeden Zwischenträger der wenigstens zwei Zwischenträger moduliert wird, und eine Trägerleistung für jeden Zwischenträger der wenigstens zwei Zwischenträger umfasst;

der Treiber (1402) konfiguriert ist, um die mehreren Träger, die durch Verarbeitung durch die Einstellvorrichtung für das Modulationsformat und die Trägerleistung (1404) gebildet werden, und die Einstellwerte für das Modulationsformat und die Trägerleistung an den Modulator (1404) zu übermitteln; und

der Modulator (1403) konfiguriert ist, um das zu modulierende Signal auf die mehrfachen Träger zu modulieren.

14. Multicarrier-Kommunikationssystem (1500), umfassend einen Empfänger (1100) und einen Sender (1400), wobei

der Empfänger (1100) konfiguriert ist, um: einen Rauschabstand der Leistung pro Einheit für jeden Zwischenträger von wenigstens zwei Zwischenträgern durch Verwendung eines modulierten Signals zu bestimmen; eine Bitfehlerrate für jeden Zwischenträger der wenigstens zwei Zwischenträger dem Rauschabstand und einer vorgegebenen Entsprechung zwischen den Rauschabständen und Bitfehlerraten, die einem Diagramm der Verteilungskurven für den Rauschabstand und die Bitfehlerraten entsprechend bestimmt wird, entsprechend zu bestimmen, um die Bitfehlerraten des Zwischenträgers zu erhalten; den Zwischenträger-Bitfehlerraten entsprechend ein Modulationsformat, in dem ein zu modulierendes Signal auf jeden Zwischenträger der wenigstens zwei Zwischenträger moduliert wird, zu bestimmen; eine Systembitfehlerrate des Multicarrier-Kommunikationssystems den Zwischenträger-Bitfehlerraten entsprechend zu bestimmen; eine Trägerleistung für jeden Zwischenträger der wenigstens zwei Zwischenträger der Systembitfehlerrate entsprechend zu bestimmen; eine Benachrichtigungsmitteilung zu erzeugen, die das Modulationsformat und die Trägerleistung umfasst; und die Benachrichtigungsmitteilung an den Sender zurückzugeben; und

der Sender (1400) die Benachrichtigungsmitteilung empfängt; dem Modulationsformat, das in der Benachrichtigungsmitteilung enthalten ist, entsprechend ein Modulationsformat einstellt, in dem das zu modulierende Signal auf jeden Zwischenträger der wenigstens zwei Zwischenträger moduliert wird; und eine Trägerleistung für jeden Zwischenträger der wenigstens zwei Zwischenträger der Trägerleistung, die in der Benachrichtigungsmitteilung enthalten ist, entsprechend einstellt.

**Revendications**

1. Procédé de détermination d'un format de modulation et d'une puissance de porteuse, appliqué à un système de communication multiporteuse et consistant à :

recevoir (S101) un signal modulé, le signal modulé étant un signal modulé sur au moins deux sous-porteuses d'une porteuse de transmission ;

déterminer (S102) un rapport signal-bruit par unité de puissance de chaque sous-porteuse des au moins deux sous-porteuses au moyen du signal modulé ;

déterminer (S103) un taux d'erreur binaire de chaque sous-porteuse des au moins deux sous-porteuses selon le rapport signal-bruit et une correspondance prédéfinie entre des rapports signal-bruit et des taux d'erreur binaires déterminés selon un graphique de courbes de distribution de rapports signal-bruit et de taux d'erreur binaires, afin d'obtenir des taux d'erreur binaires de sous-porteuse ;

déterminer (S104), selon les taux d'erreur binaires de sous-porteuse, un format de modulation dans lequel un signal à moduler est modulé sur chaque sous-porteuse des au moins deux sous-porteuses ; et

déterminer (S105) un taux d'erreur binaire de système du système de communication multiporteuse selon les taux d'erreur binaires de sous-porteuse, et déterminer (S106) une puissance de porteuse de chaque sous-porteuse des au moins deux sous-porteuses selon le taux d'erreur binaire de système.

2. Procédé selon la revendication 1, dans lequel la détermination (S104), selon les taux d'erreur binaires de sous-porteuse, d'un format de modulation dans lequel un signal à moduler est modulé sur chaque sous-porteuse des au moins deux sous-porteuses, consiste à :

augmenter (S2051) de 1 un ordre de modulation d'une sous-porteuse ayant un taux d'erreur binaire de sous-porteuse minimum ;

déterminer (S2052) un taux d'erreur binaire de la sous-porteuse dont l'ordre de modulation est augmenté de 1, selon un format de modulation de la sous-porteuse dont l'ordre de modulation est augmenté de 1, un rapport signal-bruit de la sous-porteuse dont l'ordre de modulation est augmenté de 1, et la correspondance prédéfinie entre des rapports signal-bruit et des taux d'erreur binaires ;

déterminer (S201) une quantité de bits alloués à chaque sous-porteuse des au moins deux sous-porteuses dans une unité de temps ;

déterminer (S202) une quantité totale de bits selon la quantité de bits alloués à chaque sous-porteuse des au moins deux sous-porteuses, la quantité totale de bits étant une somme des quantités de bits alloués aux au moins deux sous-porteuses ;

comparer (S203) la quantité totale de bits à une quantité cible spécifiée de bits ; et

si la quantité totale de bits est inférieure à la quantité cible de bits, réaliser les étapes précédentes de manière répétée jusqu'à ce que la quantité totale de bits soit égale à la quantité cible de bits, et utiliser un format de modulation qui correspond à chaque sous-porteuse des au moins deux sous-porteuses quand la quantité totale de bits est égale à la quantité cible de bits en tant que format de modulation dans lequel le signal à moduler est modulé sur la sous-porteuse correspondante.

3. Procédé selon la revendication 1, dans lequel la détermination (S104), selon les taux d'erreur binaires de sous-porteuse, d'un format de modulation dans lequel un signal à moduler est modulé sur chaque sous-porteuse des au moins deux sous-porteuses, consiste à :

diminuer (S2041) de 1 un ordre de modulation d'une sous-porteuse ayant un taux d'erreur binaire de sous-porteuse maximum ;

déterminer (S2042) un taux d'erreur binaire de la sous-porteuse dont l'ordre de modulation est diminué de 1, selon un format de modulation de la sous-porteuse dont l'ordre de modulation est augmenté de 1, un rapport signal-bruit de la sous-porteuse dont l'ordre de modulation est augmenté de 1, et la correspondance prédéfinie entre des rapports signal-bruit et des taux d'erreur binaires ;

déterminer (S201) une quantité de bits alloués à chaque sous-porteuse des au moins deux sous-porteuses dans une unité de temps ;

déterminer (S202) une quantité totale de bits selon la quantité de bits alloués à chaque sous-porteuse des au moins deux sous-porteuses, la quantité totale de bits étant une somme des quantités de bits alloués aux au moins deux sous-porteuses ;

comparer (S203) la quantité totale de bits à une quantité cible spécifiée de bits ; et

si la quantité totale de bits est supérieure à la quantité cible de bits, réaliser les étapes précédentes de manière répétée jusqu'à ce que la quantité totale de bits soit égale à la quantité cible de bits, et utiliser un format de modulation qui correspond à chaque sous-porteuse des au moins deux sous-porteuses quand la quantité totale de bits est égale à la quantité cible de bits en tant que format de modulation dans lequel le signal à moduler est modulé sur la sous-porteuse correspondante.

4. Procédé selon l'une quelconque des revendications 1 à 3, dans lequel la détermination (S106) d'une puissance de porteuse de chaque sous-porteuse des au moins deux sous-porteuses selon le taux d'erreur binaire de système consiste à :

allouer (S301) une puissance initiale à chaque sous-porteuse des au moins deux sous-porteuses, et réaliser un traitement de normalisation pour une première fois sur une puissance totale des puissances de porteuse respectives des au moins deux sous-porteuses après une allocation de puissance initiale, les sous-porteuses qui ont, après l'allocation de puissance initiale, un même format de modulation, ayant un même rapport signal-bruit, et une somme de puissances de porteuse, après la réalisation d'un traitement de normalisation sur la puissance totale des puissances de porteuse respectives des au moins deux sous-porteuses après une allocation de puissance initiale, étant égale à une puissance cible spécifiée ;

déterminer (S302) un taux d'erreur binaire de sous-porteuse de chaque sous-porteuse des au moins deux sous-porteuses, selon un rapport signal-bruit de chaque sous-porteuse des au moins deux sous-porteuses après la réalisation d'un traitement de normalisation pour la première fois et selon la correspondance prédéfinie entre des rapports signal-bruit et des taux d'erreur binaires ;

déterminer (S303), selon le taux d'erreur binaire de sous-porteuse de chaque sous-porteuse des au moins deux sous-porteuses, un taux d'erreur binaire de système qui est obtenu après la réalisation d'un traitement de normalisation pour la première fois, et utiliser en tant que premier taux d'erreur binaire le taux d'erreur binaire de système qui est obtenu après la réalisation d'un traitement de normalisation pour la première fois ;

augmenter (S304) de 1 un ordre de modulation d'une sous-porteuse qui exige une puissance minimale quand un traitement de normalisation est réalisé pour la première fois, et diminuer de 1 un ordre de modulation d'une sous-porteuse qui exige une puissance maximale quand un traitement de normalisation est réalisé pour la première fois, puis ré-allouer une puissance à chaque sous-porteuse des au moins deux sous-porteuses ;

réaliser (S305) un traitement de normalisation pour une seconde fois sur une puissance totale des puissances de porteuse respectives des au moins deux sous-porteuses après la ré-allocation de puissance ;

déterminer (S306) un taux d'erreur binaire de sous-porteuse de chaque sous-porteuse des au moins deux sous-porteuses, selon un rapport signal-bruit de chaque sous-porteuse des au moins deux sous-porteuses après la réalisation d'un traitement de normalisation pour la seconde fois et selon la correspondance prédéfinie entre des rapports signal-bruit et des taux d'erreur binaires ;

déterminer (S307), selon le taux d'erreur binaire de sous-porteuse de chaque sous-porteuse des au moins deux sous-porteuses, un taux d'erreur binaire de système qui est obtenu après la réalisation d'un traitement de normalisation pour la seconde fois, et utiliser en tant que second taux d'erreur binaire le taux d'erreur binaire de système qui est obtenu après la réalisation d'un traitement de normalisation pour la seconde fois ;

comparer (S308) les valeurs du premier taux d'erreur binaire et du second taux d'erreur binaire ; et

si le premier taux d'erreur binaire est supérieur au second taux d'erreur binaire, réaliser les étapes précédentes de manière répétée jusqu'à ce que le premier taux d'erreur binaire ne soit pas supérieur au second taux d'erreur binaire, et utiliser en tant que puissance de porteuse de la sous-porteuse correspondante une puissance de porteuse qui correspond à chaque sous-porteuse des au moins deux sous-porteuses quand le premier bit d'erreur binaire n'est pas supérieur au second taux d'erreur binaire.

5.  Procédé selon la revendication 1, le procédé consistant en outre, après la détermination (S104) d'un format de modulation dans lequel un signal à moduler est modulé sur chaque sous-porteuse des au moins deux sous-porteuses, et la détermination (S106) d'une puissance de porteuse de chaque sous-porteuse des au moins deux sous-porteuses, à :
    générer (S107) et envoyer (S108) un message de notification comprenant le format de modulation et la puissance de porteuse.

6.  Procédé de réglage d'un format de modulation et d'une puissance de porteuse, appliqué à un système de communication multiporteuse et consistant à :

recevoir (S401) un message de notification, le message de notification comprenant un format de modulation dans lequel un signal à moduler est modulé sur chaque sous-porteuse d'au moins deux sous-porteuses, et une puissance de porteuse de chaque sous-porteuse des au moins deux sous-porteuses ;

régler (S402), selon le format de modulation, un format de modulation dans lequel le signal à moduler est modulé sur chaque sous-porteuse des au moins deux sous-porteuses ; et

régler (S403) une puissance de porteuse de chaque sous-porteuse des au moins deux sous-porteuses selon la puissance de porteuse,

le format de modulation, compris dans le message de notification, et dans lequel un signal à moduler est modulé sur chaque sous-porteuse des au moins deux sous-porteuses, étant déterminé selon un taux d'erreur binaire de sous-porteuse de chaque sous-porteuse des au moins deux sous-porteuses, et le taux d'erreur binaire de sous-porteuse étant déterminé selon un rapport signal-bruit par unité de puissance de la sous-porteuse correspondante et une correspondance prédéfinie entre des rapports signal-bruit et des taux d'erreur binaires déterminés selon un graphique de courbes de distribution de rapports signal-bruit et de taux d'erreur binaires ; et

la puissance de porteuse, comprise dans le message de notification, de chaque sous-porteuse des au moins deux sous-porteuses, étant déterminée selon un taux d'erreur binaire de système du système de communication multiporteuse, et le taux d'erreur binaire de système étant déterminé selon le taux d'erreur binaire de sous-porteuse de chaque sous-porteuse des au moins deux sous-porteuses.

**7.** Appareil de détermination de format de modulation et de puissance de porteuse (900), appliqué à un système de communication multiporteuse et comprenant une unité de réception (901), une première unité de détermination (902), une deuxième unité de détermination (903) et une troisième unité de détermination (904), et dans lequel :

l'unité de réception (901) est configurée pour recevoir un signal modulé, le signal modulé étant un signal modulé sur au moins deux sous-porteuses d'une porteuse de transmission ;

la première unité de détermination (902) est configurée pour déterminer un rapport signal-bruit par unité de puissance de chaque sous-porteuse des au moins deux sous-porteuses au moyen du signal modulé reçu par l'unité de réception (901) ;

la deuxième unité de détermination (903) est configurée pour : déterminer un taux d'erreur binaire de chaque sous-porteuse des au moins deux sous-porteuses selon le rapport signal-bruit par unité de puissance de chaque sous-porteuse des au moins deux sous-porteuses, déterminé par la première unité de détermination (901), et selon une correspondance prédéfinie entre des rapports signal-bruit et des taux d'erreur binaires déterminés selon un graphique de courbes de distribution de rapports signal-bruit et de taux d'erreur binaires, afin d'obtenir des taux d'erreur binaires de sous-porteuse ; et déterminer un taux d'erreur binaire de système du système de communication multiporteuse selon les taux d'erreur binaires de sous-porteuse ; et

la troisième unité de détermination (904) est configurée pour : déterminer, selon les taux d'erreur binaires de sous-porteuse déterminés par la deuxième unité de détermination (903), un format de modulation dans lequel un signal à moduler est modulé sur chaque sous-porteuse des au moins deux sous-porteuses ; et déterminer une puissance de porteuse de chaque sous-porteuse des au moins deux sous-porteuses selon le taux d'erreur binaire de système déterminé par la deuxième unité de détermination (903).

**8.** Appareil de détermination (900) selon la revendication 7, dans lequel la troisième unité de détermination (904) est spécifiquement configurée pour déterminer, de la manière suivante et selon les taux d'erreur binaires de sous-porteuse, le format de modulation dans lequel un signal à moduler est modulé sur chaque sous-porteuse des au moins deux sous-porteuses :

augmenter de 1 un ordre de modulation d'une sous-porteuse ayant un taux d'erreur binaire de sous-porteuse minimum ;

déterminer un taux d'erreur binaire de la sous-porteuse dont l'ordre de modulation est augmenté de 1, selon un format de modulation de la sous-porteuse dont l'ordre de modulation est augmenté de 1, un rapport signal-bruit de la sous-porteuse dont l'ordre de modulation est augmenté de 1, et la correspondance prédéfinie entre des rapports signal-bruit et des taux d'erreur binaires ;

déterminer une quantité de bits actuellement alloués à chaque sous-porteuse des au moins deux sous-porteuses ;

déterminer une quantité totale de bits selon la quantité de bits alloués à chaque sous-porteuse des au moins deux sous-porteuses, la quantité totale de bits étant une somme des quantités de bits alloués aux au moins deux sous-porteuses ;

comparer la quantité totale de bits à une quantité cible spécifiée de bits ; et

si la quantité totale de bits est inférieure à la quantité cible de bits, réaliser les étapes précédentes de manière répétée jusqu'à ce que la quantité totale de bits soit égale à la quantité cible de bits, et utiliser un format de modulation qui correspond à chaque sous-porteuse des au moins deux sous-porteuses quand la quantité totale de bits est égale à la quantité cible de bits en tant que format de modulation dans lequel le signal à moduler est modulé sur la sous-porteuse correspondante ; ou

diminuer de 1 un ordre de modulation d'une sous-porteuse ayant un taux d'erreur binaire de sous-porteuse maximum ;

déterminer un taux d'erreur binaire de la sous-porteuse dont l'ordre de modulation est diminué de 1, selon un format de modulation de la sous-porteuse dont l'ordre de modulation est augmenté de 1, un rapport signal-bruit de la sous-porteuse dont l'ordre de modulation est augmenté de 1, et la correspondance prédéfinie entre des rapports signal-bruit et des taux d'erreur binaires ;

déterminer une quantité de bits alloués à chaque sous-porteuse des au moins deux sous-porteuses dans une unité de temps ;

déterminer une quantité totale de bits selon la quantité de bits alloués à chaque sous-porteuse des au moins deux sous-porteuses, la quantité totale de bits étant une somme des quantités de bits alloués aux au moins deux sous-porteuses ;

comparer la quantité totale de bits à une quantité cible spécifiée de bits ; et

si la quantité totale de bits est supérieure à la quantité cible de bits, réaliser les étapes précédentes de manière répétée jusqu'à ce que la quantité totale de bits soit égale à la quantité cible de bits, et utiliser un format de modulation qui correspond à chaque sous-porteuse des au moins deux sous-porteuses quand la quantité totale de bits est égale à la quantité cible de bits en tant que format de modulation dans lequel le signal à moduler est modulé sur la sous-porteuse correspondante.

**9.** Appareil de détermination (900) selon la revendication 7 ou 8, dans lequel la troisième unité de détermination (904) est spécifiquement configurée pour déterminer la puissance de porteuse de chaque sous-porteuse des au moins deux sous-porteuses selon le taux d'erreur binaire de système de la manière suivante consistant à :

allouer une puissance initiale à chaque sous-porteuse des au moins deux sous-porteuses, et réaliser un traitement de normalisation pour une première fois sur une puissance totale des puissances de porteuse respectives des au moins deux sous-porteuses après une allocation de puissance initiale, les sous-porteuses qui ont, après l'allocation de puissance initiale, un même format de modulation, ayant un même rapport signal-bruit, et une somme de puissances de porteuse, après la réalisation d'un traitement de normalisation sur la puissance totale des puissances de porteuse respectives des au moins deux sous-porteuses après une allocation de puissance initiale, étant égale à une puissance cible spécifiée ;

déterminer un taux d'erreur binaire de sous-porteuse de chaque sous-porteuse des au moins deux sous-porteuses, selon un rapport signal-bruit de chaque sous-porteuse des au moins deux sous-porteuses après la réalisation d'un traitement de normalisation pour la première fois et selon la correspondance prédéfinie entre des rapports signal-bruit et des taux d'erreur binaires ;

déterminer, selon le taux d'erreur binaire de sous-porteuse de chaque sous-porteuse des au moins deux sous-porteuses, un taux d'erreur binaire de système qui est obtenu après la réalisation d'un traitement de normalisation pour la première fois, et utiliser en tant que premier taux d'erreur binaire le taux d'erreur binaire de système qui est obtenu après la réalisation d'un traitement de normalisation pour la première fois ;

augmenter de 1 un ordre de modulation d'une sous-porteuse qui exige une puissance minimale quand le traitement de normalisation est réalisé, et diminuer de 1 un ordre de modulation d'une sous-porteuse qui exige une puissance maximale quand le traitement de normalisation est réalisé, puis ré-allouer une puissance à chaque sous-porteuse des au moins deux sous-porteuses ;

réaliser un traitement de normalisation pour une seconde fois sur une puissance totale des puissances de porteuse respectives des au moins deux sous-porteuses après la ré-allocation de puissance ;

déterminer un taux d'erreur binaire de sous-porteuse de chaque sous-porteuse des au moins deux sous-porteuses, selon un rapport signal-bruit de chaque sous-porteuse des au moins deux sous-porteuses après la réalisation d'un traitement de normalisation pour la seconde fois et selon la correspondance prédéfinie entre des rapports signal-bruit et des taux d'erreur binaires ;

déterminer, selon le taux d'erreur binaire de sous-porteuse de chaque sous-porteuse des au moins deux sous-porteuses, un taux d'erreur binaire de système qui est obtenu après la réalisation d'un traitement de normalisation pour la seconde fois, et utiliser en tant que second taux d'erreur binaire le taux d'erreur binaire de système qui est obtenu après la réalisation d'un traitement de normalisation pour la seconde fois ;

comparer les valeurs du premier taux d'erreur binaire et du second taux d'erreur binaire ; et

si le premier taux d'erreur binaire est supérieur au second taux d'erreur binaire, réaliser les étapes précédentes de manière répétée jusqu'à ce que le premier taux d'erreur binaire ne soit pas supérieur au second taux d'erreur binaire, et utiliser en tant que puissance de porteuse de la sous-porteuse correspondante une puissance de porteuse qui correspond à chaque sous-porteuse des au moins deux sous-porteuses quand le premier bit d'erreur binaire n'est pas supérieur au second taux d'erreur binaire.

10. Appareil de détermination (900) selon la revendication 7, dans lequel l'appareil de détermination comprend en outre une unité de génération (905) et une unité d'envoi (906), et dans lequel :

l'unité de génération (905) est configurée pour : après que la troisième unité de détermination a déterminé le format de modulation dans lequel un signal à moduler est modulé sur chaque sous-porteuse des au moins deux sous-porteuses, et a déterminé la puissance de porteuse de chaque sous-porteuse des au moins deux sous-porteuses, générer un message de notification comprenant le format de modulation et la puissance de porteuse ; et
l'unité d'envoi (906) est configurée pour envoyer le message de notification généré par l'unité de génération (905).

11. Récepteur (1100), comprenant un démodulateur (1101), un excitateur (1102), un décodeur (1103) et l'appareil de détermination de format de modulation et de puissance de porteuse (1104) selon l'une quelconque des revendications 7 à 10, et dans lequel :

le démodulateur (1101) est configuré pour recevoir un signal multiporteuse et réaliser une démodulation afin d'obtenir un signal modulé ;
l'excitateur (1102) est configuré pour transférer le signal modulé obtenu au moyen d'une démodulation par le démodulateur (1101) à l'appareil de détermination de format de modulation et de puissance de porteuse (1104) ;
l'appareil de détermination de format de modulation et de puissance de porteuse (1104) est configuré pour: recevoir le signal modulé transféré par l'excitateur (1102) ; traiter le signal modulé; déterminer un format de modulation dans lequel un signal à moduler est modulé sur chaque sous-porteuse d'au moins deux sous-porteuses, et une puissance de porteuse de chaque sous-porteuse des au moins deux sous-porteuses ; et générer et envoyer un message de notification comprenant le format de modulation et la puissance de porteuse ; et
le décodeur (1103) est configuré pour décoder le signal modulé traité par l'appareil de détermination de format de modulation et de puissance de porteuse (1104) et émettre un signal décodé.

12. Appareil de réglage de format de modulation et de puissance de porteuse (1200), comprenant une unité de réception (1201) et une unité de réglage (1202), et dans lequel :

l'unité de réception (1201) est configurée pour recevoir un message de notification, le message de notification comprenant un format de modulation dans lequel un signal à moduler est modulé sur chaque sous-porteuse d'au moins deux sous-porteuses, et une puissance de porteuse de chaque sous-porteuse des au moins deux sous-porteuses ; et
l'unité de réglage (1202) est configurée pour : régler, selon le format de modulation compris dans le message de notification reçu par l'unité de réception (1201), un format de modulation dans lequel le signal à moduler est modulé sur chaque sous-porteuse des au moins deux sous-porteuses ; et régler une puissance de porteuse de chaque sous-porteuse des au moins deux sous-porteuses selon la puissance de porteuse comprise dans le message de notification reçu par l'unité de réception (1201),
le format de modulation, compris dans le message de notification, et dans lequel un signal à moduler est modulé sur chaque sous-porteuse des au moins deux sous-porteuses, étant déterminé selon un taux d'erreur binaire de sous-porteuse de chaque sous-porteuse des au moins deux sous-porteuses, et le taux d'erreur binaire de sous-porteuse étant déterminé selon un rapport signal-bruit par unité de puissance de la sous-porteuse correspondante et une correspondance prédéfinie entre des rapports signal-bruit et des taux d'erreur binaires déterminés selon un graphique de courbes de distribution de rapports signal-bruit et de taux d'erreur binaires ; et
la puissance de porteuse, comprise dans le message de notification, de chaque sous-porteuse des au moins deux sous-porteuses, étant déterminée selon un taux d'erreur binaire de système du système de communication multiporteuse, et le taux d'erreur binaire de système étant déterminé selon le taux d'erreur binaire de sous-porteuse de chaque sous-porteuse des au moins deux sous-porteuses.

13. Émetteur (1400), comprenant un codeur (1401), un excitateur (1402), un modulateur (1403) et l'appareil de réglage de format de modulation et de puissance de porteuse (1404) selon la revendication 12, et dans lequel :

le codeur (1401) est configuré pour recevoir un flux de bits, et coder le flux de bits reçu ;
l'appareil de réglage de format de modulation et de puissance de porteuse (1404) est configuré pour : recevoir un flux de bits obtenu au moyen d'un codage par le codeur (1401) ; réaliser un traitement de données sur le flux de bits codé afin de former au moins deux sous-porteuses ;

et régler, selon un message de notification reçu, un format de modulation dans lequel un signal à moduler est modulé sur chaque sous-porteuse des au moins deux sous-porteuses, et une puissance de porteuse de chaque sous-porteuse des au moins deux sous-porteuses, le message de notification comprenant un format de modulation dans lequel le signal à moduler est modulé sur chaque sous-porteuse des au moins deux sous-porteuses, et une puissance de porteuse de chaque sous-porteuse des au moins deux sous-porteuses ;

l'excitateur (1402) est configuré pour transférer au modulateur (1404) les multiples porteuses formées au moyen d'un traitement par l'appareil de réglage de format de modulation et de puissance de porteuse (1404), et les valeurs de réglage de format de modulation et de puissance de porteuse ; et

le modulateur (1403) est configuré pour moduler le signal à moduler sur les multiples porteuses.

14. Système de communication multiporteuse (1500), comprenant un récepteur (1100) et un émetteur (1400), et dans lequel :

le récepteur (1100) est configuré pour : déterminer un rapport signal-bruit par unité de puissance de chaque sous-porteuse d'au moins deux sous-porteuses au moyen d'un signal modulé ; déterminer un taux d'erreur binaire de chaque sous-porteuse des au moins deux sous-porteuses selon le rapport signal-bruit et une correspondance prédéfinie entre des rapports signal-bruit et des taux d'erreur binaires déterminés selon un graphique de courbes de distribution de rapports signal-bruit et de taux d'erreur binaires, afin d'obtenir des taux d'erreur binaires de sous-porteuse ; déterminer, selon les taux d'erreur binaires de sous-porteuse, un format de modulation dans lequel un signal à moduler est modulé sur chaque sous-porteuse des au moins deux sous-porteuses ; déterminer un taux d'erreur binaire de système du système de communication multiporteuse selon les taux d'erreur binaires de sous-porteuse ; déterminer une puissance de porteuse de chaque sous-porteuse des au moins deux sous-porteuses selon le taux d'erreur binaire de système ; générer un message de notification comprenant le format de modulation et la puissance de porteuse ; et renvoyer le message de notification à l'émetteur ; et

l'émetteur (1400) reçoit le message de notification ; règle, selon le format de modulation compris dans le message de notification, un format de modulation dans lequel le signal à moduler est modulé sur chaque sous-porteuse des au moins deux sous-porteuses ; et règle une puissance de porteuse de chaque sous-porteuse des au moins deux sous-porteuses selon la puissance de porteuse comprise dans le message de notification.

FIG. 1

FIG. 2

FIG. 3

S101

Receive a modulated signal

S102

Determine a per-unit-power signal-to-noise ratio of each subcarrier of at least two subcarriers

S103

Determine subcarrier bit error rates according to the determined signal-to-noise ratio and a preset correspondence between signal-to-noise ratios and bit error rates

S105

Determine a system bit error rate according to the subcarrier bit error rates

S104

Determine, according to the subcarrier bit error rates, a modulation format in which a to-be-modulated signal is modulated onto each subcarrier of the at least two subcarriers

S106

Determine a carrier power of each subcarrier of the at least two subcarriers according to the system bit error rate

FIG. 4

Determine a quantity of bits allocated to each subcarrier of at least two subcarriers within a unit time — S201

Determine a total quantity of bits of a system according to the quantity of bits allocated to each subcarrier of the at least two subcarriers — S202

Compare the total quantity of bits with a target quantity of bits — S203

Greater | Equal | Less

Use a modulation format that corresponds to each subcarrier of the at least two subcarriers when the total quantity of bits is equal to the target quantity of bits, as a modulation format in which a to-be-modulated signal is modulated onto the corresponding subcarrier

Decrease a modulation order of a subcarrier with a highest subcarrier bit error rate by 1 — S2041

Increase a modulation order of a subcarrier with a lowest subcarrier bit error rate by 1 — S2051

Determine a bit error rate of the subcarrier whose modulation order is decreased by 1, according to a modulation format of the subcarrier whose modulation order is decreased by 1, a signal-to-noise ratio of the subcarrier whose modulation order is decreased by 1, and a preset correspondence between signal-to-noise ratios and bit error rates — S2042

Determine a bit error rate of the subcarrier whose modulation order is increased by 1, according to a modulation format of the subcarrier whose modulation order is increased by 1, a signal-to-noise ratio of the subcarrier whose modulation order is increased by 1, and a preset correspondence between signal-to-noise ratios and bit error rates — S2052

FIG. 5

| Allocate an initial power to each subcarrier of at least two subcarriers, and perform normalization processing for a first time | S301 |

↓

| Determine subcarrier bit error rates, according to a signal-to-noise ratio of each subcarrier of the at least two subcarriers after normalization processing is performed for the first time and according to a preset correspondence between signal-to-noise ratios and bit error rates | S302 |

↓

| Determine a system bit error rate that is after normalization processing is performed for the first time, and use the system bit error rate that is after normalization processing is performed for the first time as a first bit error rate | S303 |

↓

| Increase a modulation order of a subcarrier that requires a lowest power when normalization processing is performed for the first time by 1, and decrease a modulation order of a subcarrier that requires a highest power when normalization processing is performed for the first time by 1, and then re-allocate a power to each subcarrier of the at least two subcarriers | S304 |

↓

| Perform normalization processing for a second time on a total power of the respective carrier powers of the at least two subcarriers after power re-allocation | S305 |

↓

| Determine subcarrier bit error rates, according to a signal-to-noise ratio of each subcarrier of the at least two subcarriers after normalization processing is performed for the second time and according to the preset correspondence between signal-to-noise ratios and bit error rates | S306 |

↓

| Determine a system bit error rate that is after normalization processing is performed for the second time, and use the system bit error rate that is after normalization processing is performed for the second time as a second bit error rate | S307 |

↓

Greater — Compare the first bit error rate with the second bit error rate — S308

↓ Less

| Use a carrier power that corresponds to each subcarrier when the first bit error rate is not greater than the second bit error rate, as a carrier power of the corresponding subcarrier |

FIG. 6

S101

Receive a modulated signal

S102

Determine a per-unit-power signal-to-noise ratio of each subcarrier of at least two subcarriers

S103

Determine subcarrier bit error rates according to the determined signal-to-noise ratio and a preset correspondence between signal-to-noise ratios and bit error rates

S105

Determine a system bit error rate according to the subcarrier bit error rates

S104

Determine, according to the subcarrier bit error rates, a modulation format in which a to-be-modulated signal is modulated onto each subcarrier of the at least two subcarriers

S106

Determine a carrier power of each subcarrier of the at least two subcarriers according to the system bit error rate

S107

Generate a notification message including the modulation format and the carrier power

S108

Send the notification message

FIG. 7

S401

Receive a
notification
message

S402

Adjust, according to a modulation
format included in the notification
message, a modulation format in
which a to-be-modulated signal is
modulated onto each subcarrier of at
least two subcarriers

S403

Adjust a carrier power of each
subcarrier of the at least two
subcarriers according to a carrier
power included in the notification
message

FIG. 8

900

Modulation format and carrier power determining apparatus

901        902        903        904

| Receiving unit | First determining unit | Second determining unit | Third determining unit |

FIG. 9A

900

**Modulation format and carrier power determining apparatus**

901                          902                                              904

| Receiving unit | First determining unit | Second determining unit | Third determining unit |

| Sending unit | Generation unit |

906                          905

FIG. 9B

1000

Modulation format and carrier power determining apparatus

1003

Receiver

1004

1001

Processor

1002

Memory

FIG. 10

1100

Receiver

1101　　　　　　　　1104　　　　　　　　　　1102　　　　　　　1103

| Demodulator | Modulation format and carrier power determining apparatus | Driver | Decoder |

FIG. 11

1200

Modulation format and carrier power adjusting apparatus

1201　　　　　　　　　　　　　　　　　　　　1202

| Receiving unit | Adjustment unit |

FIG. 12

1300

Modulation format and carrier power adjusting apparatus

1303

Receiver

1304

1301

Processor

1302

Memory

FIG. 13

1400

Transmitter

| Encoder | 1401 | Modulation format and carrier power adjusting apparatus | 1404 | Driver | 1402 | Modulator | 1403 |

FIG. 14

1500

Multi-carrier communications system

1400

1100

| Transmitter | Receiver |
|---|---|

Encoding | Modulation format and carrier power adjusting apparatus | Driver | Modulator

Demodulator | Driver | Modulation format and carrier power determining apparatus | Decoder

Modulation format and carrier power

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2391048 A2

- WO 2012162655 A1